# EUROPEAN PATENT SPECIFICATION

(11) **EP 1 760 354 B1**
(45) Date of publication and mention of the grant of the patent: **19.03.2008**
(21) Application number: 06017699.7
(22) Date of filing: 25.08.2006
(51) Int. Cl.: F16F 9/10

(54) **Viscous fluid-sealed damper and disk device**
Viskose Flüssigkeit enthaltender Dämpfer und Plattenvorrichtung
Amortisseur renfermant un liquide visqueux et dispositif à disque

(30) Priority: 31.08.2005 JP 2005251058
(43) Date of publication of application: 07.03.2007
(73) Proprietor: POLYMATECH CO., LTD., Chuo-Ku, Tokyo (JP)
(72) Inventor: Yamazaki, Jun, Kita-ku Tokyo (JP)
(74) Representative: Lorenz, Markus

(56) References cited:
- JP-A- 2002 242 977
- US-A- 5 323 885
- US-A- 5 745 472

## Description

### BACKGROUND OF THE INVENTION

### 1. Field of the Invention

The present invention relates to a technique for damping vibrations of disk devices for reproducing information recorded on disk-shaped recording media (hereinafter referred to as "disks") such as a hard disk drive (HDD) and a compact disk (CD), which are used for acoustic equipment, video equipment, information equipment, and the like, regardless of whether the equipments are mounted on vehicles or designed for consumer products. In particular, the present invention relates to a viscous fluid-sealed damper and a disk device for damping vibrations of a mechanical chassis mounted with a reproduction mechanism for disks.

### 2. Description of the Related Art

A disk device is a precision device having a structure in which a magnetic head or an optical pickup is caused to approach a disk rotating at a high speed with the aid of a motor so as to record information onto the disk or reproduce the contents thereof. Therefore, the disk device is vulnerable to internal vibrations caused as a result of rotation of an eccentric disk and external vibrations transmitted from the outside of equipment, and needs to be prevented from malfunctioning due to those vibrations. Thus, as a rule, a viscous fluid-sealed damper is interposed between a mechanical chassis, which is mounted with a reproduction mechanism for disks, and a casing to damp vibrations of the mechanical chassis.

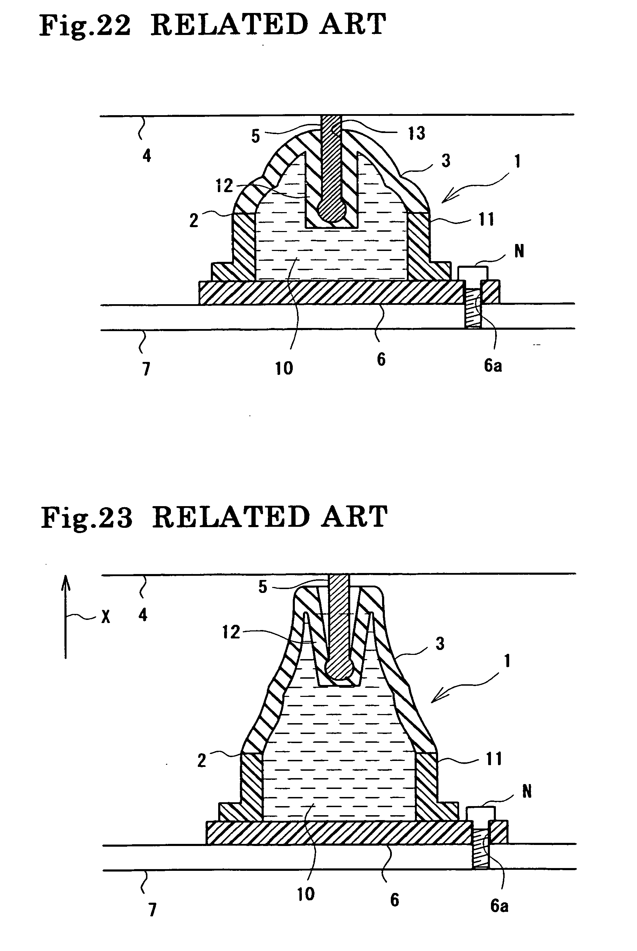

A viscous fluid-sealed damper (1) according to such a conventional example has a structure as shown in, for example, Fig. 22. That is, a flexible portion (3) made of a rubbery elastic body as a constituent of a closed container (2) is fixed to a hard mounting shaft (5) made of a resin or a metal, which is provided on a mechanical chassis (4) as "a supported body", and a lid portion (6) as a constituent of the closed container (2) is fixed to a casing (7) as "a supporting body" by means of a mounting screw (N) and mounted between the mechanical chassis (4) and the casing (7). On the other hand, a suspension spring (8), which is fitted at one end thereof to the casing (7), is fitted at the other end thereof to the mechanical chassis (4), so the mechanical chassis (4) is supported in a floating state within the casing (7). As described above, a conventional disk device (9) employs both the viscous fluid-sealed damper (1) and the suspension spring (8) to elastically support the mechanical chassis (4) in a floating state within the casing (7). This type of conventional disk device (9) is disclosed in, for example, JP 2002-242977 A, US-A-5 323 885 or US-A-5 745 472.

The above-mentioned viscous fluid-sealed damper (1) has a concrete construction as shown in Fig. 23. That is, a viscous fluid (10) such as silicon oil is sealed up within the closed container (2). The closed container (2) is constructed by sealing one end side of a cylindrical peripheral wall portion (11) made of a hard resin with the domed flexible portion (3) made of the rubbery elastic body, and sealing the other flanged end side of the peripheral wall portion (11) with the plate-shaped lid portion (6), which is made of a hard resin. A stirring cylinder portion (12), which assumes the shape of a bottomed circular cylinder and protrudes into the closed container (2), is formed at a center of a top part of the flexible portion (3). The stirring cylinder portion (12) is provided with an accommodation recess portion (13) for receiving the mounting shaft (5).

A vibration damping effect of the viscous fluid-sealed damper (1) constructed as described above is achieved as a result of a viscous resistance, which is generated when the stirring cylinder portion (12) integrated with the mounting shaft (5) inserted in the accommodation recess portion (13) moves in an interlocking manner both vertically and laterally upon transmission of vibrations to the disk device (9) and then stirs the viscous fluid (10) sealed up within the closed container (2).

The disk device (9) has been reduced in size and thickness with a view to reducing a mounting space thereof or allowing portable equipment to be mounted therewith. Thus, the clearance between the mechanical chassis (4) and the casing (7) needs to be reduced, and the size of the viscous fluid-sealed damper (1) needs to be reduced as well. However, if the viscous fluid-sealed damper (1) according to the conventional example is reduced in size, the rigid stirring cylinder portion (12) may hit an inner wall surface of the closed container (2), so the viscous fluid (10) cannot be stirred sufficiently. For this reason, the viscous fluid-sealed damper (1) cannot be sufficiently reduced in size.

In the disk device (9), which is designed to be mounted in a vehicle, the support position of the mechanical chassis (4) within the casing (7) may differ depending on whether or not a disk has been inserted in the disk device (9). More specifically, the mechanical chassis (4) is supported substantially at a central position within the casing (7) where the most remarkable vibration damping effect is achieved, when the disk has been inserted in the disk device (9). In removing the disk, however, the mechanical chassis (4) is supported at a position shifted toward a removal port of the casing (7). In this case, as shown in, for example, Fig. 23, when the support position of the mechanical chassis (4) shifts as indicated by the arrow X to pull the stirring cylinder portion (12) integrated with the mounting shaft (5), the flexible portion (3) is stretched and bent inward, due to fixation of the lid portion (6) to the casing (7), such that the volume of the closed container (2) is increased. After the disk is removed, the disk device (9) is left in this state for a long time. Then, air enters the closed container (2) through the flexible portion (3) and noticeably deteriorates the vibration damping effect of the viscous fluid-sealed damper (1), so a sound skip phenomenon may be caused.

### SUMMARY OF THE INVENTION

The present invention has been made against the background of the conventional art as described above. It is therefore an object of the present invention to provide a viscous fluid-sealed damper and a disk device which make it possible to contribute toward reducing the size of the disk device and prevent air from entering a closed container to achieve a sufficient vibration damping effect.

To achieve the above-mentioned object, according to an aspect of the present invention, there is provided a viscous fluid-sealed damper mounted between a supporting body and a supported body for damping vibrations of the supported body through a viscous resistance of a viscous fluid , including a closed container within which the viscous fluid is sealed up, in which: the closed container is formed in a shape of a hollow flat plate out of a cylindrical peripheral wall portion, an inner wall portion formed inside the peripheral wall portion along a direction of a cylinder axis thereof, a first closing portion exhibiting flexibility, which connects same end sides of the peripheral wall portion and the inner wall portion to each other to close a clearance therebetween, and a second closing portion exhibiting flexibility, which connects the other end sides of the peripheral wall portion and the inner wall portion to each other to close a clearance therebetween; the peripheral wall portion has formed thereon an outer mounting portion for being mounted to one of the supporting body and the supported body; and the inner wall portion is provided with an inner mounting portion for being mounted to the other of the supporting body and the supported body.

In the present invention, the closed container is formed in the shape of the hollow flat plate out of the cylindrical peripheral wall portion, the inner wall portion formed inside the peripheral wall portion along the direction of the cylinder axis thereof, the first closing portion exhibiting flexibility, which connects same end sides of the peripheral wall portion and the inner wall portion to each other to close a clearance therebetween, and the second closing portion exhibiting flexibility, which connects the other end sides of the peripheral wall portion and the inner wall portion to each other to close a clearance therebetween. That is, the closed container is reduced in thickness in comparison with the closed container according to the conventional example. Thus, the space for mounting the viscous fluid-sealed damper is reduced. It is therefore possible to contribute toward reducing the size of the disk device. "The hollow flat shape" mentioned herein refers to the shape of a flat plate designed to be larger in width than in thickness and having an air gap therein. However, the flat plate may have irregularities. The air gap in the flat plate is filled with the viscous fluid (10) and therefore has no substantial air gap.

An outer mounting portion for being mounted to one of the supporting body and the supported body is formed on the peripheral wall portion, and an inner mounting portion for being mounted to the other of the supporting body and the supported body is provided on the inner wall portion. That is, when the supported body moves relative to the supporting body, the inner wall portion, the first closing portion, and the second closing portion also move in an interlocking manner. In accordance with this interlocking movement, the viscous fluid sealed up within the closed container is stirred. Therefore, a vibration damping effect resulting from the stirring of the viscous fluid can be achieved even if the stirring cylinder portion protruding into the closed container as in the case of the conventional example is dispensed with.

According to another aspect of the present invention, in the viscous fluid-sealed damper, the closed container is made of a rubbery elastic body.

According to another aspect of the present invention, in the viscous fluid-sealed damper, the peripheral wall portion and the inner wall portion of the closed container are made of a hard resin, and the first closing portion and the second closing portion of the closed container are made of a rubbery elastic body.

In those aspects of the present invention, the first closing portion and the second closing portion are made of the rubbery elastic body. Thus, as the inner wall portion moves, both the first closing portion and the second closing portion are deformed in an interlocking manner. Therefore, the closed container can be prevented from being partially stretched to the extent of being increased in volume, so air is prevented from entering the closed container.

According to another aspect of the present invention, in the viscous fluid-sealed damper, the closed container is formed in a shape of a hollow circular plate.

In the present invention, the closed container is formed in the shape of the hollow circular plate. Thus, there is no corner portion in the closed container where the viscous fluid stays without being stirred. Therefore, the viscous fluid sealed up within the closed container flows smoothly, so an effective damping characteristic can be achieved. Also, there is no corner portion in the first closing portion and the second closing portion, which assume the shape of the circular plate, where a deformation stress is enhanced without being relieved when the inner wall portion has moved. Thus, the stress can be prevented from being applied to part of the first closing portion or the second closing portion. Therefore, the durability of the closed container is enhanced. "The shape of the hollow circular plate" mentioned herein refers to the shape of a circular flat plate designed to be larger in width than in thickness and having an air gap therein. However, the circular plate may have irregularities. The air gap in the circular plate is filled with the viscous fluid and therefore has no substantial air gap.

According to another aspect of the present invention, in the viscous fluid-sealed damper, the first closing portion and the second closing portion are formed in a shape of bellows.

In the present invention, the first closing portion and the second closing portion are formed in the shape of the bellows. Thus, even when the inner wall portion has moved with respect to the peripheral wall portion by a relatively long distance, the first closing portion and the second closing portion are not excessively deformed (i.e., elastically deformed) in an extendable/contractible manner. Therefore, the viscous fluid can effectively serve to damp vibrations without losing the viscous resistance thereof. Also, the durability of the first closing portion and the second closing portion, which repeatedly receive vibrations, can be enhanced.

According to another aspect of the present invention, in the viscous fluid-sealed damper, the outer mounting portion has an outer mounting hole penetrating a wall thickness thereof, and the inner mounting portion has an inner mounting hole penetrating a wall thickness thereof.

In the present invention, the outer mounting portion has the outer mounting hole penetrating the wall thickness thereof, and the inner mounting portion has the inner mounting hole penetrating the wall thickness thereof. Thus, for example, when the supporting body and the supported body are provided with pin holes respectively, and when fixing pins are inserted through the outer mounting hole and the inner mounting hole to be screwed into the pin holes respectively, the viscous fluid-sealed damper can be mounted to the disk device with ease.

In the viscous fluid-sealed damper of the present invention, the outer mounting portion and the inner mounting portion have mounting protrusions protruding from a same surface side of the closed container, respectively. That is, the outer mounting portion has the outer mounting protrusion protruding therefrom, and the inner mounting portion has the inner mounting protrusion protruding therefrom. The outer mounting protrusion and the inner mounting protrusion protrude from the same surface side of the closed container.

In the present invention, the outer mounting protrusion is formed on the outer mounting portion, and the inner mounting protrusion is formed on the inner mounting portion. Thus, for example, when the supporting body and the supported body are provided with engagement holes respectively, and when the outer mounting protrusion and the inner mounting protrusion are inserted through the engagement holes respectively, the viscous fluid-sealed damper can be mounted to the disk device with ease. Both the outer mounting protrusion and the inner mounting protrusion protrude from the same surface side of the closed container, so those mounting protrusions are mounted (i.e., inserted) in the same direction. Therefore, a mechanical chassis can be mounted within a casing with ease.

According to another aspect of the present invention, there is provided a disk device having the viscous fluid-sealed damper according to any one of the above-mentioned aspects of the present invention mounted between the casing and the mechanical chassis in various manners.

That is, in a first disk device according to the present invention, a through-hole is formed through one of the mechanical chassis and the casing, the outer mounting portion of the viscous fluid-sealed damper is fixed to an open hole edge of the through-hole, and the inner mounting portion of the viscous fluid-sealed damper is fixed to the other of the mechanical chassis and the casing.

In the present invention, the through-hole is formed through the aforementioned one of the mechanical chassis and the casing, the outer mounting portion of the viscous fluid-sealed damper is fixed to the open hole edge of the through-hole, and the inner mounting portion of the viscous fluid-sealed damper is fixed to the other of the mechanical chassis and the casing. Thus, when vibrations are transmitted to the disk device, the inner wall portion interlocks with the other of the mechanical chassis and the casing, to which the inner mounting portion is fixed, and moves vertically and laterally. Therefore, the inner wall portion stirs the viscous fluid sealed up within the closed container, and achieves a sufficient vibration damping effect. As the inner wall portion moves, both the first closing portion and the second closing portion are deformed. Thus, even when a fixed position of the mechanical chassis at the time when no disk has been inserted has moved, both the first closing portion and the second closing portion are deformed in an interlocking manner. Therefore, the closed container can be prevented from being partially stretched. Accordingly, air can be prevented from entering the closed container, so a sufficient vibration damping effect is achieved.

In a second disk device, a through-hole is formed through the casing, the outer mounting portion of the viscous fluid-sealed damper is fixed to an open hole edge of the through-hole from an outer surface side of the casing, and the inner mounting portion of the viscous fluid-sealed damper is fixed to the mechanical chassis.

In the present invention, the through-hole is formed through the casing, the outer mounting portion of the viscous fluid-sealed damper is fixed to the open hole edge of the through-hole from the outer surface side of the casing, and the inner mounting portion of the viscous fluid-sealed damper is fixed to the mechanical chassis. That is, in this disk device, the viscous fluid-sealed damper is not mounted in a clearance between the mechanical chassis and the casing. Consequently, the clearance can be set small, so the disk device can be reduced in size. Further, the viscous fluid-sealed damper is fixed from the outer surface side of the casing. As a result, the viscous fluid-sealed damper can be mounted with ease.

Further, in a third disk device, a through-hole is formed through the casing, the peripheral wall portion of the viscous fluid-sealed damper is fitted into the through-hole to fix the outer mounting portion of the viscous fluid-sealed damper to an open hole edge of the through-hole, and the inner mounting portion of the viscous fluid-sealed damper is fixed to the mechanical chassis.

In the present invention, the through-hole is formed through the casing, the peripheral wall portion of the viscous fluid-sealed damper is fitted into the through-hole to fix the outer mounting portion of the viscous fluid-sealed damper to the open hole edge of the through-hole, and the inner mounting portion of the viscous fluid-sealed damper is fixed to the mechanical chassis. That is, in this disk device, the viscous fluid-sealed damper is fitted in the through-hole and can therefore be restrained from sticking out from the casing. Therefore, the clearance between the mechanical chassis and the casing and the space outside the casing can be reduced, and the space for installing the disk device can be reduced.

According to the viscous fluid-sealed damper and the disk device of the present invention, the inner wall portion, the first closing portion, and the second closing portion stir the viscous fluid sealed up within the closed container in an interlocking manner as the supporting body is displaced relative to the supported body, so a vibration damping effect can be achieved even if the closed container does not have the stirring cylinder portion as in the case of the conventional example. Therefore, the viscous fluid-sealed damper can be reduced in size, and the disk device can be reduced in size and thickness.

Both the first closing portion and the second closing portion are deformed as the inner wall portion moves. Therefore, the closed container is prevented from being partially stretched to the extent of being increased in volume, and air can be prevented from entering the closed container. As a result, a sufficient vibration damping effect is achieved. Accordingly, the viscous fluid-sealed damper can be realized with a good performance.

The contents of the present invention are not limited to the foregoing description. The advantages, features, and fields of application of the present invention will become more apparent by reading the following description, which will be given with reference to the accompanying drawings. It should also be understood that all the appropriate modifications that are made without departing from the spirit of the present invention are included in the scope of the present invention.

### BRIEF DESCRIPTION OF THE DRAWINGS

In the accompanying drawings:

Fig. 1, which consists of Fig. 1A as a plan view and Fig. 1B as a cross-sectional view taken along the line I-I in Fig. 1A, shows a viscous fluid-sealed damper according to a first embodiment of the present invention;

Fig. 2 is an explanatory diagram showing a disk device according to the first embodiment of the present invention;

Fig. 3 is an operational explanatory diagram showing the viscous fluid-sealed damper according to the first embodiment of the present invention;

Fig. 4 is an operational explanatory diagram showing the viscous fluid-sealed damper according to the first embodiment of the present invention;

Fig. 5, which consists of Fig. 5A as a plan view and Fig. 5B as a cross-sectional view taken along the line V-V in Fig. 5A, shows a modified example of the viscous fluid-sealed damper according to the first embodiment of the present invention;

Fig. 6, which consists of Fig. 6A as a plan view and Fig. 6B as a cross-sectional view taken along the line VI-VI in Fig. 6A, shows another modified example of the viscous fluid-sealed damper according to the first embodiment of the present invention;

Fig. 7, which consists of Fig. 7A as a plan view and Fig. 7B as a cross-sectional view taken along the line VII-VII in Fig. 7A, shows a viscous fluid-sealed damper according to a second embodiment of the present invention;

Fig. 8 is an enlarged explanatory diagram showing an essential part of a disk device according to the second embodiment of the present invention;

Fig. 9, which consists of Fig. 9A as a plan view and Fig. 9B as a cross-sectional view taken along the line IX-IX in Fig. 9A, shows a viscous fluid-sealed damper according to a third embodiment of the present invention;

Fig. 10 is an enlarged explanatory diagram showing an essential part of a disk device according to the third embodiment of the present invention;

Fig. 11, which consists of Fig. 11A as a plan view and Fig. 11B as a cross-sectional view taken along the line XI-XI in Fig. 11A, shows a viscous fluid-sealed damper according to a fourth embodiment of the present invention;

Fig. 12 is an explanatory diagram showing a disk device according to the fourth embodiment of the present invention;

Fig. 13, which consists of Fig. 13A as a plan view and Fig. 13B as a cross-sectional view taken along the line XIII-XIII in Fig. 13A, shows a modified example of the viscous fluid-sealed damper according to the fourth embodiment of the present invention;

Fig. 14, which consists of Fig. 14A as a plan view and Fig. 14B as a cross-sectional view taken along the line XIV-XIV in Fig. 14A, shows another modified example of the viscous fluid-sealed damper according to the fourth embodiment of the present invention;

Fig. 15, which consists of Fig. 15A as a plan view and Fig. 15B as a cross-sectional view taken along the line XV-XV in Fig. 15A, shows a viscous fluid-sealed damper according to a fifth embodiment of the present invention;

Fig. 16 is an enlarged explanatory diagram showing a disk device according to the fifth embodiment of the present invention;

Fig. 17, which consists of Fig. 17A as a plan view and Fig. 17B as a cross-sectional view taken along the line XVII-XVII in Fig. 17A, shows a viscous fluid-sealed damper according to a sixth embodiment of the present invention;

Fig. 18 is an enlarged explanatory diagram showing an essential part of a disk device according to the sixth embodiment of the present invention;

Fig. 19 is an explanatory diagram showing another disk device mounted with the viscous fluid-sealed damper according to the fourth embodiment of the present invention;

Fig. 20 is an explanatory diagram showing still another disk device mounted with the viscous fluid-sealed damper according to the fifth embodiment of the present invention;

Fig. 21 is an explanatory diagram showing a disk device according to a conventional example;

Fig. 22 is a cross-sectional view of a viscous fluid-sealed damper according to the conventional example; and

Fig. 23 is an operational explanatory diagram showing the viscous fluid-sealed damper of Fig. 22.

### DETAILED DESCRIPTION OF THE PREFERRED EMBODIMENTS

Embodiments of the present invention will be described hereinafter with reference to the drawings. In these drawings, reference symbols are used to denote portions and components. The same reference symbol is used for any construction common to the respective embodiments of the present invention, and repetition of the same description will be omitted.

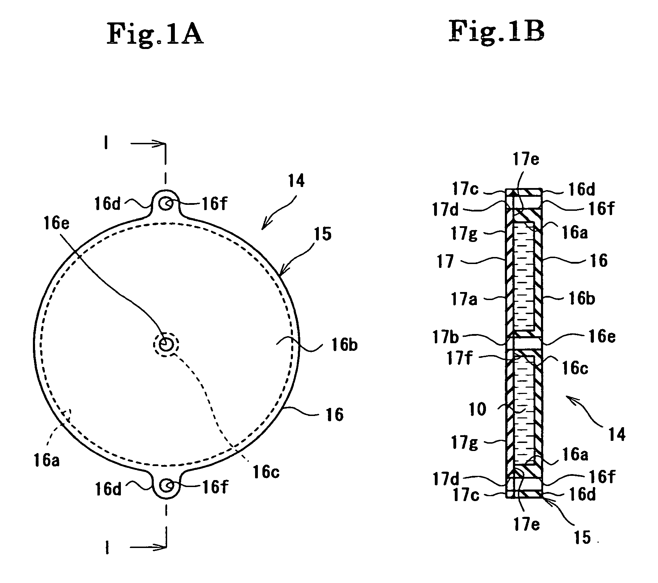

First Embodiment [Figs. 1A to 4]

A. Embodiment of Viscous Fluid-sealed Damper: A viscous fluid-sealed damper (14) according to the first embodiment of the present invention is constructed such that a viscous fluid (10) is sealed up within a closed container (15). The closed container (15), which is made of a rubbery elastic body, assumes the shape of a hollow circular plate. The closed container (15) is formed by securely fixing a container body (16) to a lid body (17) formed separately therefrom by means of an adhesive.

The container body (16), which assumes the shape of a shallow, circular object, is composed of an outer cylinder portion (16a), a bottom portion (16b), an inner cylinder portion (16c), and two body protrusion portions (16d). The outer cylinder portion (16a), which assumes the shape of a circular cylinder, is closed on one end side thereof by the bottom portion (16b), which assumes the shape of a circular plate. The inner cylinder portion (16c), which assumes the shape of a circular cylinder and protrudes from an inner surface of the bottom portion (16b) along a direction of a cylinder axis of the outer cylinder portion (16a), is formed at a center of the bottom portion (16b). The length over which the inner cylinder portion (16c) extends along the direction of the cylinder axis is exactly equal to the length of the outer cylinder portion (16a). A circular body inner hole (16e) is formed through an axial center of the inner cylinder portion (16c). The two body protrusion portions (16d) are so formed at symmetrical positions around the inner cylinder portion (16c) as to protrude outward of the outer cylinder portion (16a) respectively. The body protrusion portions (16d) are formed to be equal in thickness to the outer cylinder portion (16a), and circular body outer holes (16f) are formed therethrough respectively.

The lid body (17), which assumes the shape of a substantially circular plate, is composed of a lid portion (17a), a lid body inner hole (17b), and two lid body protrusion portions (17c). The lid portion (17a) assumes the shape of a circular plate. The lid body inner hole (17b), which assumes a circular shape, is formed at a center of the lid portion (17a) through a wall thickness thereof. The lid body protrusion portions (17c) are so formed at symmetrical positions of the lid portion (17a) around the lid body inner hole (17b) as to protrude outward from outer edges of the lid portion (17a) respectively. Lid body outer holes (17d), which assume a circular shape, are formed through wall thicknesses of the lid body protrusion portions (17c) respectively.

Here, a material of viscous fluid-enclosed damper (14) of an embodiment of the present invention will be explained. A material of "rubber-like elastic body" deforms flexibly and has bending resistance. As such material, a synthetic rubber having a damping effect and a thermoplastic elastomer are preferable. Examples of the synthetic rubber include a butyl rubber, a styrene-butadiene rubber, a chloroprene rubber, a nitrile rubber, a urethane rubber, a silicone rubber, a fluororubber, and an acrylic rubber. Examples of the thermoplastic elastomer include a styrene-based thermoplastic elastomer, an olefin-based thermoplastic elastomer, a urethane-based thermoplastic elastomer, and a vinyl chloride-based thermoplastic elastomer.

A material of viscous fluid (10) is preferably a liquid or the liquid added with solid particles that neither react with nor dissolve in the liquid. Examples of the material include liquids such as a silicone-based oil, a paraffin-based oil, an ester-based oil, and a liquid rubber, or the liquid added with solid particles that neither react with nor dissolve in the liquid. Of those, a silicone-based oil is preferable as a liquid in terms of performance requirements such as temperature dependency, heat resistance, or reliability. Specific examples of the silicone-based oil include a dimethyl silicone oil, a methylphenyl silicone oil, a methyl hydrogen silicone oil, and a fluorine-modified silicone oil. Examples of the solid particles that neither react with nor dissolve in those silicone-based oils include a silicone resin powder, a polymethylsilsesquioxane powder, wet silica, dry silica, glass beads, glass balloons, or those produced by treating surfaces thereof. Any of those may be used alone, or two or more kinds may be used in combination.

In the viscous fluid-sealed damper (14) according to the first embodiment of the present invention constructed as described above, the outer cylinder portion (16a) of the container body (16) and an outer edge region (17e) of the lid portion (17a), which is in contact with the outer cylinder portion (16a) via an adhesive, constitute "a peripheral wall portion (16a, 17e)". The inner cylinder portion (16c) of the container body (16) and an inner edge region (i.e., hole edge region) (17f) of the lid portion (17a), which is in contact with the inner cylinder portion (16c) via an adhesive, constitute "an inner wall portion (16c, 17f)". The flat bottom portion (16b) of the container body (16) constitutes "a first closing portion (16b)". A region (17g) of the lid portion (17a) excluding the regions (17e, 17f) that are in contact with the container body (16) via the adhesive, constitutes "a second closing portion (17g)". The body outer holes (16f) of the container body (16) and the lid body outer holes (17d) of the lid body (17) constitute outer mounting holes (16f, 17d). The body protrusion portions (16d) and the lid protrusion portions (17c), which have the outer mounting holes (16f, 17d) respectively, constitute outer mounting portions (16d, 17c). The body inner hole (16e) of the container body (16) and the lid body inner hole (17b) of the lid body (17) constitute "an inner mounting hole (16e, 17b)". The inner wall portion (16c, 17f) provided with the inner mounting hole (16e, 17b) constitutes an inner mounting portion (16c, 17f).

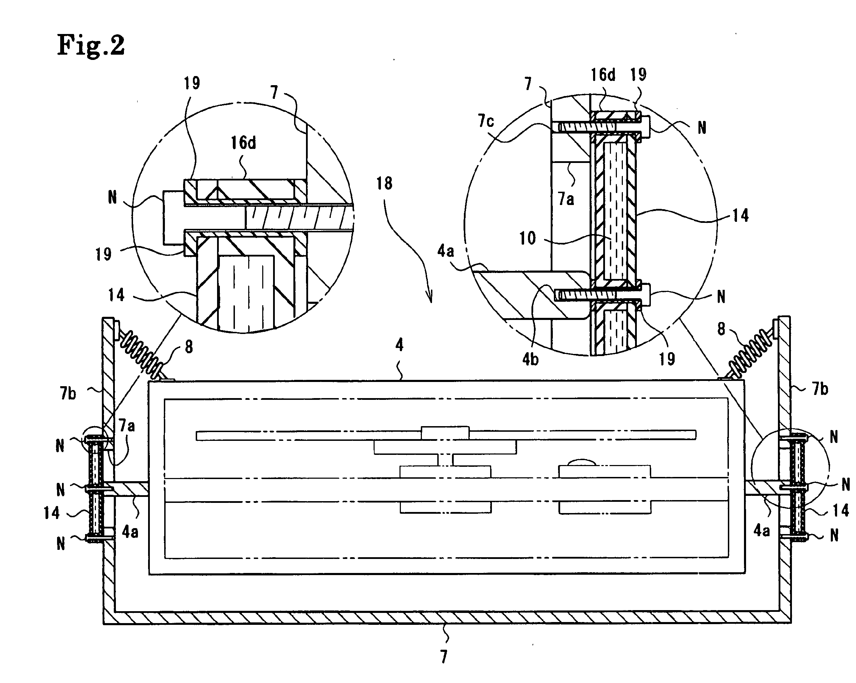

B. Embodiment of Disk Device: Next, an embodiment of a disk device equipped with viscous fluid-sealed dampers (14) will be described. As shown in Fig. 2, a disk device (18) according to the first embodiment of the present invention is equipped with a mechanical chassis (4), a casing (7), the viscous fluid-sealed dampers (14), and suspension springs (8). Each of the viscous fluid-sealed dampers (14) and each of the suspension springs (8) are mounted between the mechanical chassis (4) and the casing (7).

Circular through-holes (7a) are formed through the casing (7). The outer mounting portions (16d, 17c) of each of the viscous fluid-sealed dampers (14) is fixed to an open hole edge of each of the through-holes (7a) from an outer surface (7b) side of the casing (7). On the other hand, solid protrusion portions (4a) each assuming the shape of a circular cylinder are so formed on lateral surfaces of the mechanical chassis (4) as to protrude toward the through-holes (7a) respectively. The inner mounting portion (16c, 17f) of each of the viscous fluid-sealed dampers (14) is fixed to a tip of each of the protrusion portions (4a).

The through-holes (7a) of the casing (7) are formed through the lateral surfaces thereof, between which the mechanical chassis (4) is sandwiched. Each of the through-holes (7a) is formed to be slightly smaller in diameter than "the peripheral wall portion (16a, 17e)", which is composed of the outer cylinder portion (16a) of each of the viscous fluid-sealed dampers (14) and the outer edge region (17e) of the lid portion (17a) which is in contact with the outer cylinder portion (16a). Each of mounting screws (N) for fixing "the outer mounting portions (16d, 17c)" of each of the viscous fluid-sealed dampers (14) is screwed in a screw hole (7c), which is formed through the open hole edge of each of the through-holes (7a).

Each of the protrusion portions (4a) of the mechanical chassis (4) has a length in which a tip thereof extends to the inside of each of the through-holes (7a). Each of mounting screws (N) for fixing "the inner mounting portion (16c, 17f)" of each of the viscous fluid-sealed dampers (14) is screwed in each of screw holes (4b), which are formed at the tips of the protrusion portions (4a) respectively.

Each of mounting fixtures (19) is inserted through and fitted to each of the inner mounting holes (16e, 17b) and the outer mounting holes (16f, 17d) of each of the viscous fluid-sealed dampers (14). The mounting fixtures (19), which are made of a hard resin, are formed in the shape of a substantially circular cylinder. Annular collar portions protrude outward from respective ends of the cylinder. Each of the inner mounting holes (16e, 17b) or the outer mounting holes (16f, 17d) is engaged between both the collar portions. A tip of each of the mounting screws (N) is inserted into a central hole of each of the mounting fixtures (19), and then screwed into each of the screw holes (7c, 4b). Thus, the viscous fluid-sealed dampers (14) are fixed.

C. Operation and Effect of Viscous Fluid-sealed Damper (14) and Disk Device (18) according to First Embodiment: Next, an operation and an effect of this embodiment of the present invention will be described.

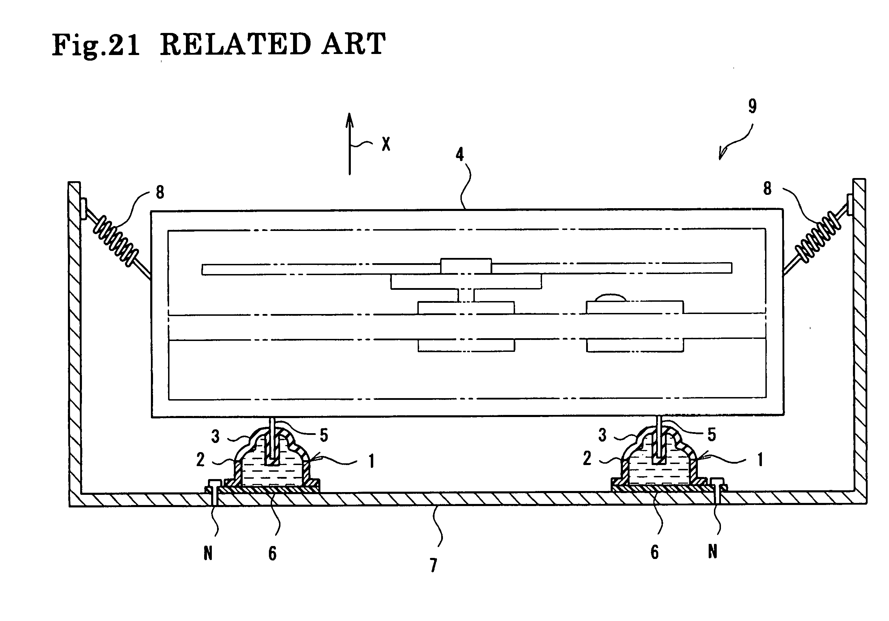

In the viscous fluid-sealed damper (14), the closed container (15) is formed in the shape of a hollow circular plate. In other words, the closed container (15) is formed to be smaller in thickness than the closed container (2) according to the conventional example as shown in Fig. 21. Thus, the space for mounting the viscous fluid-sealed damper (14) is reduced. It is therefore possible to contribute toward reducing the size of the disk device (18).

When the mechanical chassis (4) moves, the inner cylinder portion (16c), the inner edge region (17f) of the lid portion (17a) which is in contact with the inner cylinder portion (16c), the bottom portion (16b), and the region (17g) of the lid portion (17a), which is different from the regions (17e, 17f) that are in contact with the container body (16), also move in an interlocking manner. In accordance with this interlocking movement, the viscous fluid (10) sealed up within the closed container (15) is stirred. Therefore, a vibration damping effect can be achieved even without the stirring cylinder portion (12) protruding into the closed container (2) according to the conventional example as shown in Fig. 21.

In the viscous fluid-sealed damper (14), the closed container (15) is formed in the shape of a hollow circular plate, so there is no corner portion in the closed container (15) where the viscous fluid (10) stays without being stirred. Therefore, the viscous fluid (10) sealed up within the closed container (15) flows smoothly, thereby exhibiting an effective damping characteristic.

There is no corner portion in the closed container (15) where a deformation stress is enhanced without being relieved when the inner cylinder portion (16c) and the inner edge region (17f) of the lid portion (17a), which is in contact with the inner cylinder portion (16c), move. Thus, the stress can be prevented from being applied to part of the closed container (15). Therefore, the durability of the closed container (15) is enhanced, so the viscous fluid-sealed damper (14) can be realized with high durability.

In the viscous fluid-sealed damper (14), when the disk device (18) receives vibrations, both the flat bottom portion (16b) and the region (17g) of the lid portion (17a), which is different from the regions (17e, 17f) that are in contact with the container body (16), are deformed as the inner cylinder portion (16c) and the inner edge region (17f) of the lid portion (17a), which is in contact with the inner cylinder portion (16c), move. Thus, the closed container (15) can be prevented from being partially stretched to the extent of being increased in volume. Therefore, air can be prevented from entering the closed container (15), so a sufficient vibration damping effect is achieved. Accordingly, the viscous fluid-sealed damper (14) can be realized with a good performance.

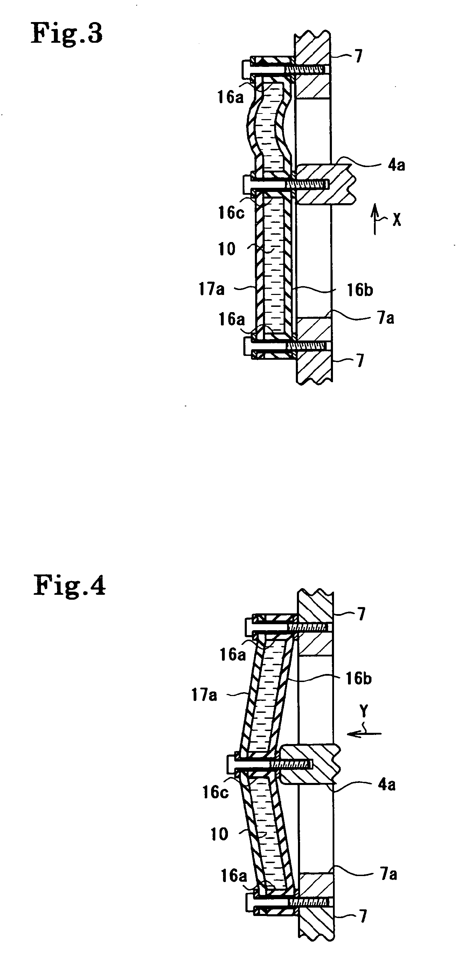

Now, deformation of the aforementioned bottom portion (16b) and the region (17g) of the lid portion (17a), which is different from the regions (17e, 17f) that are in contact with the container body (16), namely, deformation of the first closing portion (16b) and the second closing portion (17g) will be described more specifically with reference to Figs. 3 and 4. When the disk device (18) receives vibrations and the mechanical chassis (4) moves relative to the casing (7), the inner cylinder portion (16c) of the viscous fluid-sealed damper (14) and the inner edge region (17f) of the lid portion (17a), which is in contact with the inner cylinder portion (16c), move in an interlocking manner. In other words, the inner mounting portion (16c, 17f) moves in an interlocking manner. Then, the bottom portion (16b) and the region (17g) of the lid portion (17a), which is different from the regions (17e, 17f) that are in contact with the container body (16), namely, both the first closing portion (16b) and the second closing portion (17g) are deformed. For example, Fig. 3 shows a state where the inner cylinder portion (16c) and the inner edge region (17f) of the lid portion (17a), which is in contact with the inner cylinder portion (16c), have moved in a direction indicated by an arrow (X) (i.e., upward in Fig. 3). The clearance between the outer cylinder portion (16a) located above and the outer edge region (17c) of the lid portion (17a), which is in contact with the outer cylinder portion (16a) on one hand, and the inner cylinder portion (16c) and the inner edge region (17f) of the lid portion (17a), which is in contact with the inner cylinder portion (16c) on the other decreases, and both the bottom portion (16b) and the region (17g) of the lid portion (17a), which is different from the regions (17e, 17f) that are in contact with the container body (16), are deformed in a curved manner. On the other hand, the clearance between the outer cylinder portion (16a) located below and the outer edge region (17e) of the lid portion (17a), which is in contact with the outer cylinder portion (16a) on one hand, and the inner cylinder portion (16c) and the inner edge region (17f) of the lid portion (17a), which is in contact with the inner cylinder portion (16c) on the other increases, so both the bottom portion (16b) and the region (17g) of the lid portion (17a), which is different from the regions (17e, 17f) that are in contact with the container body (16), are extended. As a result, the viscous fluid (10) flows downward from above in Fig. 3, thereby creating a viscous resistance. Fig. 4 shows a state where the inner cylinder portion (16c) and the inner edge region (17f) of the lid portion (17a), which is in contact with the inner cylinder portion (16c) have moved, namely, where the inner mounting portion (16c, 17f) has moved in a direction indicated by an arrow (Y) (i.e., leftward in Fig. 4). The bottom portion (16b) and the region (17g) of the lid portion (17a), which is different from the regions (17e, 17f) that are in contact with the container body (16), namely, both the first closing portion (16b) and the second closing portion (17g), are extended leftward. As a result, the viscous fluid (10) rasps, thereby creating a viscous resistance.

The outer mounting holes (16f, 17d) are formed through the wall thicknesses of the body protrusion portions (16d) and the lid body protrusion portions (17c) respectively. The inner mounting holes (16e, 17b) are formed through the wall thicknesses of the inner cylinder portion (16c) and the inner edge region (17f) of the lid portion (17a), which is in contact with the inner cylinder portion (16c), respectively. Thus, when the mounting screws (N) are inserted through the outer mounting holes (16f, 17d) and the inner mounting holes (16e, 17b), which are fitted with the mounting fixtures (19), respectively, and then screwed into pin holes (7c) and pin holes (4c), which are provided through the casing (7) and the mechanical chassis (4), respectively, the viscous fluid-sealed damper (14) can be mounted to the disk device (18) with ease.

In the disk device (18), the viscous fluid-sealed damper (14) is not mounted in the clearance between the mechanical chassis (4) and the casing (7). Therefore, the clearance between the mechanical chassis (4) and the casing (7) can be reduced, so the disk device (18) can be reduced in size.

In the disk device (18), the viscous fluid-sealed damper (14) is fixed from the outer surface (7b) side of the casing (7). As a result, the viscous fluid-sealed damper (14) can be mounted with ease.

D. Modified Example of Viscous Fluid-sealed Damper (14) according to First Embodiment: Finally, a modified example of the viscous fluid-sealed damper (14) will be described.

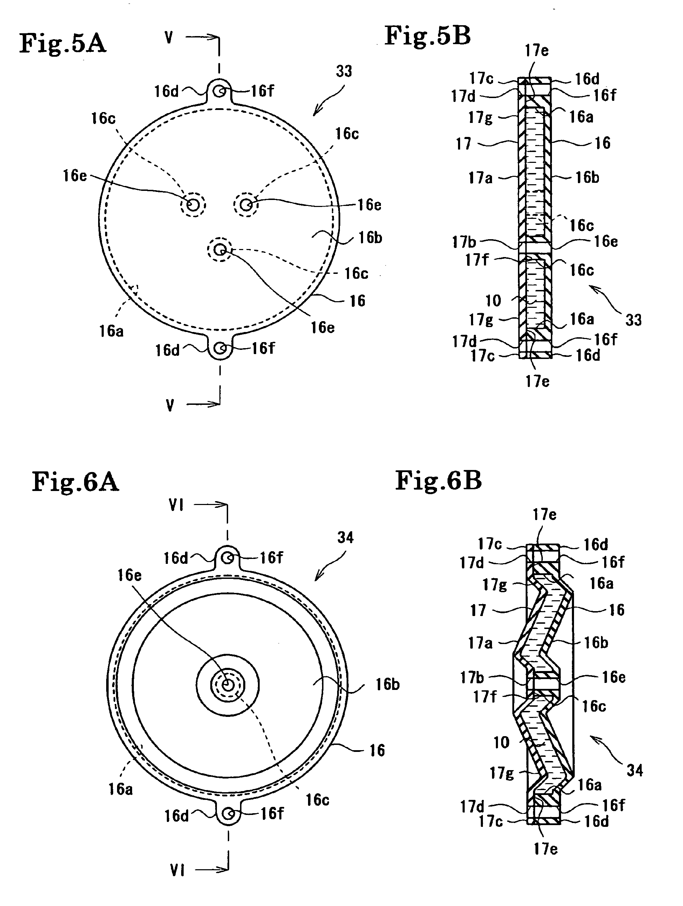

In a viscous fluid-sealed damper (33) according to a first modified example of the first embodiment of the present invention, as shown in Figs. 5A and 5B, a plurality of (three in Fig. 5A) "inner wall portions (16c, 17f)", which are each composed of the aforementioned inner cylinder portion (16c) and the inner edge region (17f) of the lid portion (17a) that is in contact with the inner cylinder portion (16c), are formed. When the mechanical chassis (4) is thus supported at a plurality of scattered locations, the occurrence of stress concentration as in the case where the mechanical chassis (4) is supported at a single point is avoided. In consequence, the durability of the viscous fluid-sealed damper (33) can be enhanced. Also, the viscous fluid (10) is stirred at a plurality of locations, so the stirring efficiency of the viscous fluid (10) is enhanced. As a result, a great vibration damping effect can be achieved.

In a viscous fluid-sealed damper (34) according to a second modified example of the first embodiment of the present invention, as shown in Figs. 6A and 6B, "the first closing portion (16b)" which is formed of the aforementioned flat bottom portion (16b), and "the second closing portion (17g)" which is formed of the region (17g) of the lid portion (17a) which is different from the regions (17e, 17f) that are in contact with the container body (16), are formed in the shape of bellows. This bellows-shape makes it possible to guarantee a geometrical deformation margin for preventing the rubbery elastic body from being excessively deformed in an extendable/contractible manner (i.e., elastically deformed). Therefore, even when the inner cylinder portion (16c) and the inner edge region (17f) of the lid portion (17a), which is in contact with the inner cylinder portion (16c), move by a long distance, the bottom portion (16b) and the region (17g) of the lid portion (17a), which is different from the regions (17e, 17f) that are in contact with the container body (16), are not excessively deformed in an extendable/contractible manner. Therefore, the viscous fluid (10) can effectively serve to damp vibrations without losing the viscous resistance thereof. Also, the durability of the rubbery elastic body, which repeatedly receives vibrations, can be enhanced.

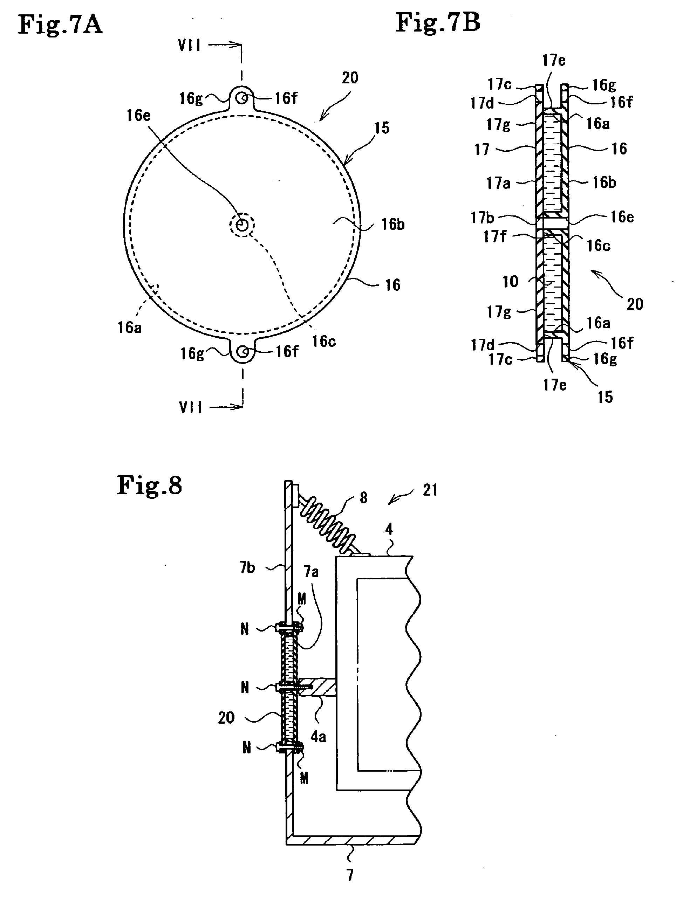

Second Embodiment [Figs. 7A to 8]

A. Embodiment of Viscous Fluid-sealed Damper: A viscous fluid-sealed damper (20) according to the second embodiment of the present invention is different from the viscous fluid-sealed damper (14) according to the first embodiment of the present invention in structure of body protrusion portions (16g) of the container body (16). The viscous fluid-sealed damper (20) according to the second embodiment of the present invention is identical to the viscous fluid-sealed damper (14) according to the first embodiment of the present invention in other constructional details.

The body protrusion portions (16g) of the viscous fluid-sealed damper (20) are formed to be equal in thickness to the bottom portion (16b), through the circular body outer holes (16f).

In the viscous fluid-sealed damper (20) according to the second embodiment of the present invention constructed as described above, the body protrusion portions (16g) and the lid body protrusion portions (17c) constitute "the outer mounting portions (16g, 17c)". That is, "the outer mounting portions (16g, 17c)" are designed as two divisional portions protruding in parallel, and the body outer holes (16f) and the lid body outer holes (17d) constitute "the outer mounting holes (16f, 17d)".

B. Embodiment of Disk Device: A disk device (21) according to the second embodiment of the present invention has a structure in which the viscous fluid-sealed damper (20) is mounted between the mechanical chassis (4) and the casing (7), which is different from the disk device (18) according to the first embodiment of the present invention. The disk device (21) according to the second embodiment of the present invention is identical to the disk device (18) according to the first embodiment of the present invention in other constructional details.

Each of the through-holes (7a) formed through the casing (7) is formed to be slightly larger in diameter than the outer cylinder portion (16a) of the viscous fluid-sealed damper (20). The outer cylinder portion (16a) of the viscous fluid-sealed damper (20) is fitted in each of the through-holes (7a). The body protrusion portions (16g) and the lid body protrusion portions (17c) of the viscous fluid-sealed damper (20) are fixed to the casing (7) by means of the mounting screws (N), respectively, such that the open hole edges of the casing (7) are sandwiched from both sides thereof.

The aforementioned mounting fixtures (19) are inserted through and fitted to the body outer holes (16f) and the lid body outer holes (17d), which form the inner mounting hole (16e, 17b) and the outer mounting holes (16f, 17d) of the viscous fluid-sealed damper (20), respectively. That is, the mounting fixture (19) fitted in each of the body outer holes (16f) is separate from the mounting fixture (19) fitted in each of the lid body outer holes (17d). The tip of each of the mounting screws (N) is inserted into a central hole of the mounting fixture (19) fitted in each of the body outer holes (16f), the screw hole (7c), and a central hole of the mounting fixture (19) fitted to each of the lid body outer holes (17d), and then screwed into a nut (M). Thus, the viscous fluid-sealed damper (20) is fixed.

C. Operation and Effect of Viscous Fluid-sealed Damper (20) and Disk Device (21) according to Second Embodiment: Next, an operation and an effect of the second embodiment of the present invention will be described. However, the following description will be limited to features peculiar to the second embodiment of the present invention and will not cover those common to the first embodiment of the present invention.

The viscous fluid-sealed damper (20) is mounted to the casing (7) in such a state that the outer cylinder portion (16a) is fitted in each of the through-holes (7a) formed through the casing (7). Thus, the viscous fluid-sealed damper (20) can be restrained from sticking out from the casing (7). Therefore, the clearance between the mechanical chassis (4) and the casing (7), and the space outside the casing (7) can be reduced, so the space for installing the disk device (21) can be reduced.

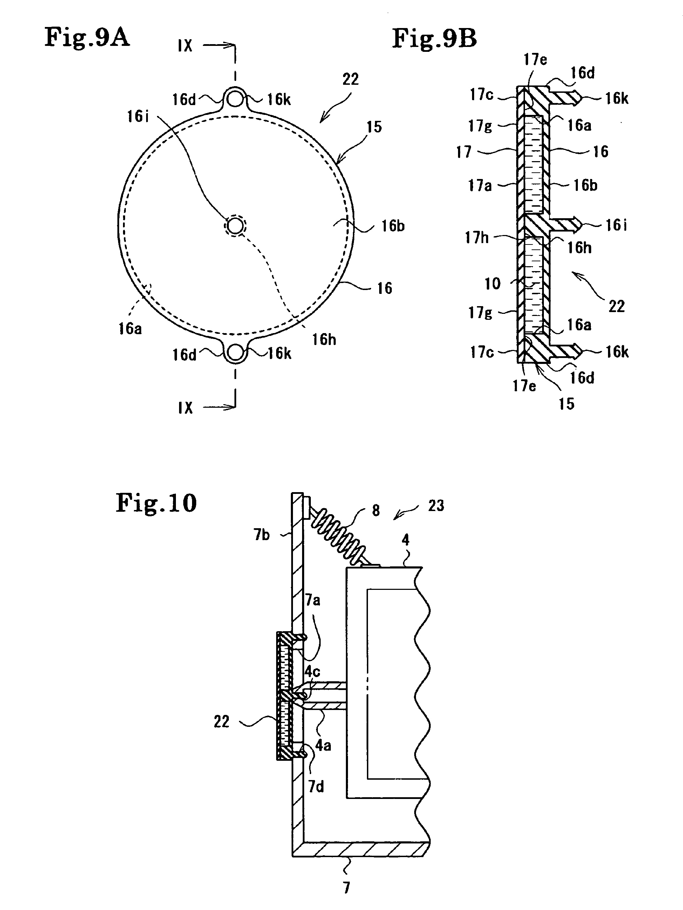

Third Embodiment [Figs. 9A to 10]

A. Embodiment of Viscous Fluid-sealed Damper: A viscous fluid-sealed damper (22) according to the third embodiment of the present invention is different from the viscous fluid-sealed damper (14) according to the first embodiment of the present invention in that the mounting screws (N) are completely dispensed with. More specifically, first of all, a solid center shaft portion (16h) and the solid body protrusion portions (16d) are formed as part of the container body (16). Secondly, the lid body inner hole (17b) and the lid body outer hole (17d) of the lid body (17) according to the first embodiment of the present invention are dispensed with. In other words, the viscous fluid-sealed damper (22) according to the third embodiment of the present invention is different from the viscous fluid-sealed damper (14) according to the first embodiment of the present invention in that the inner wall portion (16h) of the viscous fluid-sealed damper (22) according to this embodiment of the present invention is formed of the solid center shaft portion (16h) and has an inner mounting protrusion (16i) protruding outward, while the inner wall portion (16c, 17f) of the viscous fluid-sealed damper (14) according to the first embodiment of the present invention is structured to have the inner mounting hole (16e, 17b). The viscous fluid-sealed damper (22) according to the third embodiment of the present invention is different from the viscous fluid-sealed damper (14) according to the first embodiment of the present invention also in that the outer mounting portions (16d, 16k) of the viscous fluid-sealed damper (22) are structured to have the solid outer mounting protrusion (16k), while the outer mounting portions (16d, 17c) of the viscous fluid-sealed damper (14) are structured to have the outer mounting holes (16f, 17d). The viscous fluid-sealed damper (22) according to the third embodiment of the present invention is identical to the viscous fluid-sealed damper (14) according to the first embodiment of the present invention in other constructional details.

The center shaft portion (16h) provided through the container body (16) is formed at a central position of the bottom portion (16b) in the shape of a circular cylinder protruding from an inner surface of the bottom portion (16b) along the direction of the cylinder axis of the outer cylinder portion (16a). The length over which the center shaft portion (16h) extends in the direction of the cylinder axis is just equal to the length of the outer cylinder portion (16a). A tip of the center shaft portion (16h) is securely fixed to the lid portion (17a) by means of an adhesive (not shown). An inner mounting protrusion (16i), which assumes the shape of a circular cylinder and protrudes outward of the bottom portion (16b), is formed at an axial center of the center shaft portion (16h). On the other hand, outer mounting protrusions (16k), each of which assumes the shape of a circular cylinder and protrudes outward of the bottom portion (16b), are formed on the two body protrusion portions (16d) respectively. A tip portion of the inner mounting protrusion (16i), which assumes the shape of an arrow tail, is engaged with each of the protrusion portions (4a) of the mechanical chassis (4) through the engagement hole (4c) of the protrusion portions (4a). Thus, the inner mounting protrusion (16i) and the mechanical chassis (4) are fixed to each other in such a state that the tip of the protrusion portion (4a) abuts on the bottom portion (16b) with no substantial play left therebetween. Likewise, the tip of each of the outer mounting protrusions (16k), which assumes the shape of an arrow tail, is engaged with the casing (7) through each of engagement holes (7d) formed through the open hole edges of the casing (7). Thus, each of the outer mounting protrusions (16k) and the casing (7) are fixed to each other in such a state that the outer surface (7b) of the casing (7) is in surface contact with each of the body protrusion portions (16d) with no substantial play left therebetween.

In the viscous fluid-sealed damper (22) according to the third embodiment of the present invention constructed as described above, the inner mounting protrusion (16i), the center shaft portion (16h), and the region (17h) of the lid portion (17a), which is in contact with the center shaft portion (16h) via the adhesive, constitute "the inner mounting portion (16i, 16h, 17h)". The outer mounting protrusions (16k), the body protrusion portions (16d), and the lid body protrusion portions (17c) constitute "the outer mounting portions (16d, 16k, 17c)".

B. Embodiment of Disk Device: A disk device (23) according to the third embodiment of the present invention is different from the disk device (18) according to the first embodiment of the present invention in a structure in which the viscous fluid-sealed damper (22) according to the third embodiment of the present invention is mounted between the casing (7) and the mechanical chassis (4).

As is the case with the viscous fluid-sealed damper (14) according to the first embodiment of the present invention, the viscous fluid-sealed damper (22) is fixed to the outer surface (7b) side of the casing (7). The inner mounting protrusion (16i) is engaged with and fixed to each of the protrusion portions (4a) through each of the engagement holes (4c) formed through the tips of the protrusion portions (4a), each of which assumes the shape of a hollow circular cylinder and is provided on the mechanical chassis (4). Each of the outer mounting protrusions (16k) is engaged with and fixed to the outer surface (7b) of the casing (7) through each of the engagement holes (7d), which are formed through the open hole edges of the casing (7) respectively.

C. Operation and Effect of Viscous Fluid-sealed Damper (22) and Disk Device (23) according to Third Embodiment: Next, an operation and an effect of the third embodiment of the present invention will be described. However, the following description will be limited to features peculiar to the third embodiment of the present invention and will not cover those common to the first embodiment of the present invention.

In the viscous fluid-sealed damper (22), the inner mounting protrusion (16i) and the outer mounting protrusions (16k) are formed as mounting protrusions protruding from the same surface side of the container body (16). Thus, when the inner mounting protrusion (16i) and the outer mounting protrusions (16k) are pressed into and inserted through the engagement holes (4c, 7d), which are provided through the casing (7) and the mechanical chassis (4) respectively, the viscous fluid-sealed damper (22) can thereby be mounted to the disk device (23) with ease. The inner mounting protrusion (16i) and the outer mounting protrusions (16k) protrude from the same surface side of the closed container (15), so the mounting protrusions are mounted (inserted) in the same direction. Therefore, the mechanical chassis (4) can be mounted within the casing (7) with ease.

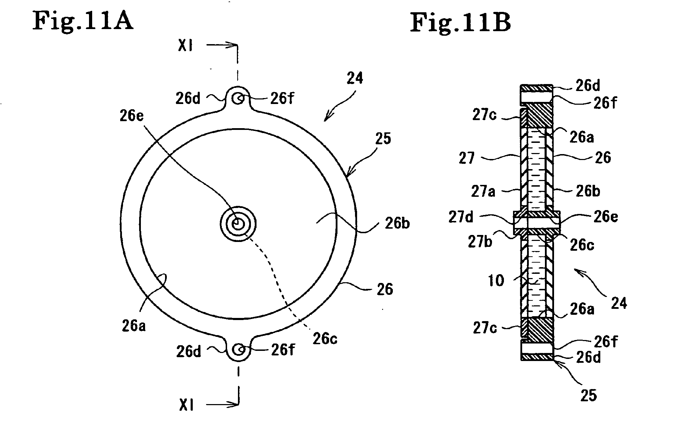

Fourth Embodiment [Figs. 11A to 12]

A. Embodiment of Viscous Fluid-sealed Damper: A viscous fluid-sealed damper (24) according to the fourth embodiment of the present invention is different from the viscous fluid-sealed damper (14) according to the first embodiment of the present invention in a construction in which both a container body (26) and a lid body (27) are formed of a rubbery elastic body and a hard resin. That is, a closed container (25) is formed by securely fixing the container body (26), which is formed as an integrated object of the rubbery elastic body and the hard resin, to the lid body (27), which is formed separately from the container body (26) as an integrated object of the rubbery elastic body and the hard resin, by ultrasonic welding. Description of the same construction as in the first embodiment of the present invention will be omitted.

The container body (26), which assumes the shape of a shallow, circular object, is composed of an outer cylinder portion (26a), a bottom portion (26b), an inner cylinder portion (26c), and two body protrusion portions (26d). The outer cylinder portion (26a) is made of the hard resin and formed in the shape of a circular cylinder. The bottom portion (26b), which is made of the rubbery elastic body and formed in the shape of a circular ring, is securely fixed to one end side of the outer cylinder portion (26a). The inner cylinder portion (26c), which assumes the shape of a circular cylinder and protrudes outward of an inner surface and an outer surface of the bottom portion (26b) while penetrating the bottom portion (26b) along the direction of the cylinder axis of the outer cylinder portion (26a), is securely fixed to a center of the bottom portion (26b). The length over which the inner cylinder portion (26c) protruding from the inner surface of the bottom portion (26b) extends along the direction of the cylinder axis is just equal to the length of the outer cylinder portion (26a). A circular body inner hole (26e) is formed through an axial center of the inner cylinder portion (26c), which is formed of the hard resin. The body protrusion portions (26d) are formed at symmetrical positions around the inner cylinder portion (26c) in a manner that they protrude outward of the outer cylinder portion (26a) respectively. The body protrusion portions (26d), which are made of the hard resin, are formed in a staged manner to be larger in thickness than the outer cylinder portion (26a). Circular body outer holes (26f) are formed through the body protrusion portions (26d) respectively.

The lid body (27), which assumes the shape of a circular plate, is composed of a lid portion (27a), an inner cylinder portion (27b), and an outer edge portion (27c). The lid portion (27a) is made of a rubbery elastic body and formed in the shape of a circular ring. The inner cylinder portion (27b), which assumes the shape of a circular cylinder and protrudes from an outer surface of the lid portion (27a) while penetrating the lid portion (27a) along the direction of a cylinder axis of the outer cylinder portion (26a), is securely fixed to a center of the lid portion (27a). A circular lid body inner hole (27d) is formed through an axial center of the inner cylinder portion (27b), which is formed of a hard resin. The outer edge portion (27c), which is made of a hard resin, is formed along an outer edge of the lid portion (27a) in the shape of a circular ring.

It is preferable that thermoplastic resins are used as the materials for "the hard resins" of the container body (26) and the lid body (27) constructed as described above, from the standpoint of required performances such as mechanical strength, heat resistance, durability, dimensional accuracy, and reliability, a reduction in weight, and workability. For example, thermoplastic resins such as polyethylene resin, polypropylene resin, polyvinyl chloride resin, polystyrene resin, acrylic nitrile-styrene-acrylate resin, acrylic nitrile-butadiene-styrene resin, polyamide resin, polyacetal resin, polycarbonate resin, polyethylene terephthalate resin, polybutylene terephthalate resin, polyphenylene oxide resin, polyphenylene ether resin, polyphenylene sulfide resin, polyurethane resin, and liquid crystal polymer, or composite resins composed of these resins can be used. A powdery or fibrous metal, a powdery or fibrous glass, or a filling agent such as a filler can be added to each of these thermoplastic resins to further enhance dimensional accuracy or heat resistance.

In the viscous fluid-sealed damper (24) according to the fourth embodiment of the present invention constructed as described above, the outer cylinder portion (26a) of the container body (26) and the outer edge portion (27c) of the lid body (27) constitute "a peripheral wall portion (26c, 27b)". The inner cylinder portion (26c) of the container body (26) and the inner cylinder portion (27b) of the lid body (27) constitute "an inner wall portion (26c, 27b)". The flat bottom portion (26b) constitutes "a first closing portion (26b)", and the flat lid portion (27a) constitutes "a second closing portion (27a)". A body inner hole (26e) of the container body (26) and a lid body inner hole (27d) of the lid body (27) constitute "an inner mounting hole (26e, 27d)". The inner wall portion (26c, 27b), which is provided with the inner mounting hole (26e, 27d), constitutes the inner mounting portion (26c, 27b). Each of body outer holes (26f) of the container body (26) constitutes an outer mounting hole (26f), and each of body protrusion portions (26d) having the outer mounting hole (26f) constitutes "the outer mounting portion (26d)".

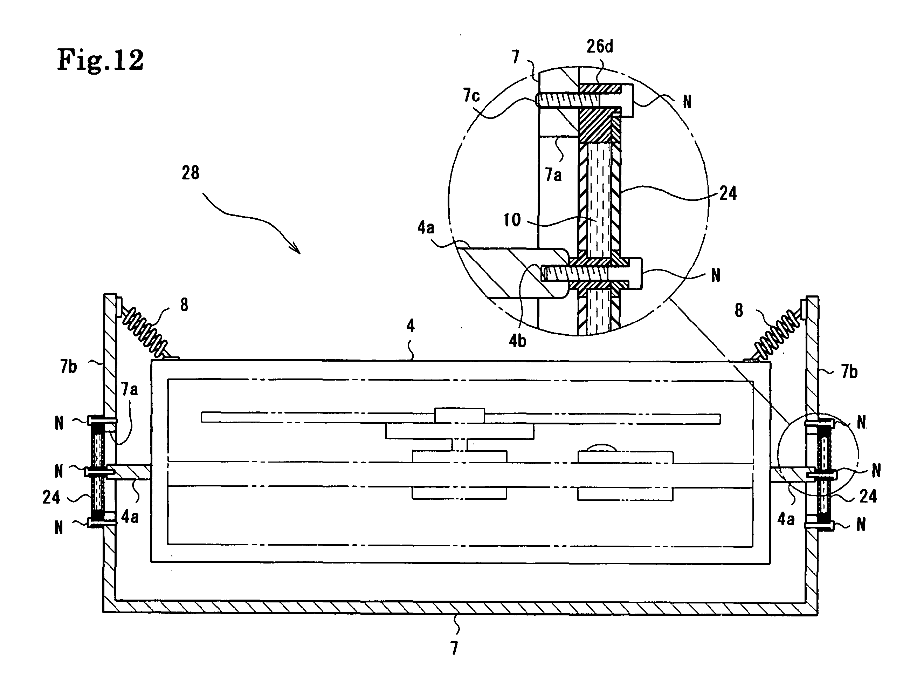

B. Embodiment of Disk Device: As shown in Fig. 12, a disk device (28) according to the fourth embodiment of the present invention is different from the disk device (18) according to the first embodiment of the present invention in a structure in which the viscous fluid-sealed damper (24) according to the fourth embodiment of the present invention is mounted between the casing (7) and the mechanical chassis (4). The disk device (28) according to the fourth embodiment of the present invention is identical to the disk device (18) according to the first embodiment of the present invention in other constructional details, so the same description will be omitted.

As is the case with the viscous fluid-sealed damper (14) according to the first embodiment of the present invention, the viscous fluid-sealed damper (24) is fixed to the outer surface (7b) of the casing (7) by means of the mounting screws (N). The inner cylinder portion (26c) and the inner cylinder portion (27b), which function as "the inner mounting portion (26c, 27b)", and the body protrusion portions (26d), which function as "the outer mounting portion (26d)", are formed of the hard resin. Therefore, there is no need to fit the mounting fixtures (19), which are made of the hard resin, as in the case of the viscous fluid-filled damper (14).

C. Operation and Effect of Viscous Fluid-sealed Damper (24) and Disk Device (28) according to Fourth Embodiment: Next, an operation and an effect of this embodiment will be described.

In the viscous fluid-sealed damper (24), the closed container (25) is formed in the shape of a hollow circular plate. That is, the closed container (25) is formed to be smaller in thickness than the closed container (2) according to the conventional example as shown in Fig. 21. Thus, the space for mounting the viscous fluid-sealed damper (24) is reduced. It is therefore possible to contribute toward reducing the size of the disk device (28).

When the mechanical chassis (4) moves, the inner cylinder portion (26c), the inner cylinder portion (27b), the bottom portion (26b), and the lid portion (27a) also move in an interlocking manner. In accordance with this interlocking movement, the viscous fluid (10) sealed up within the closed container (25) is stirred. Therefore, a vibration damping effect can be achieved even without the stirring cylinder portion (12) protruding into the closed container (2) constructed as in the case of the conventional example shown in Fig. 21.

In the viscous fluid-sealed damper (24), the closed container (25) is formed in the shape of a hollow circular plate, so there is no corner portion in the closed container (25) where the viscous fluid (10) stays without being stirred. Therefore, the viscous fluid (10) sealed up within the closed container (25) flows smoothly, so an effective damping characteristic is achieved.

There is no corner portion in the closed container (25) where a deformation stress is enhanced without being relieved, when the inner cylinder portion (26c) and the inner cylinder portion (27b) move. Thus, the stress can be prevented from being applied to part of the closed container (25). Therefore, the durability of the closed container (25) is enhanced, so the viscous fluid-sealed damper (24) with high durability can be realized.

In the viscous fluid-sealed damper (24), when the disk device (28) receives vibrations, both the flat bottom portion (26b) and the flat lid portion (27a) are deformed as the inner cylinder portion (26c) and the inner cylinder portion (27b) move respectively. Thus, the closed container (25) can be prevented from being partially stretched to the extent of being increased in volume. Therefore, air can be prevented from entering the closed container (25), so a sufficient vibration damping effect is achieved. Accordingly, the viscous fluid-sealed damper (24) with a high performance can be realized.

The outer mounting holes (26f) are formed through the wall thicknesses of the body protrusion portions (26d), respectively, and the inner mounting holes (26e, 27d) are formed through the wall thicknesses of the inner cylinder portion (26c) and the inner cylinder portion (27b) respectively. Thus, when the mounting screws (N) are inserted through the outer mounting holes (26f) and the inner mounting holes (26e, 27d), respectively, and then screwed into the pin holes (7c) and the pin holes (4b), which are provided through the casing (7) and the mechanical chassis (4), respectively, the viscous fluid-sealed damper (24) can be mounted to the disk device (28) with ease. The body protrusion portions (26d), the inner cylinder portion (26c), and the inner cylinder portion (27b) are each formed of the hard resin, so the mounting screws (N) can be directly inserted through the outer mounting holes (26f) and the inner mounting holes (26c, 27d) respectively. Therefore, the number of parts is small, and the mounting operation can accordingly be performed with ease.

In the disk device (28), the viscous fluid-sealed damper (24) is not mounted in the clearance between the mechanical chassis (4) and the casing (7). Therefore, the clearance between the mechanical chassis (4) and the casing (7) can be reduced, so the disk device (28) can be reduced in size.

In the disk device (28), the viscous fluid-sealed damper (24) is fixed from the outer surface (7b) side of the casing (7). Therefore, the viscous fluid-sealed damper (24) can be mounted with ease.

D. Modified Examples of Viscous Fluid-sealed Damper (24) according to Fourth Embodiment: Finally, modified examples of the viscous fluid-sealed damper (24) will be described.

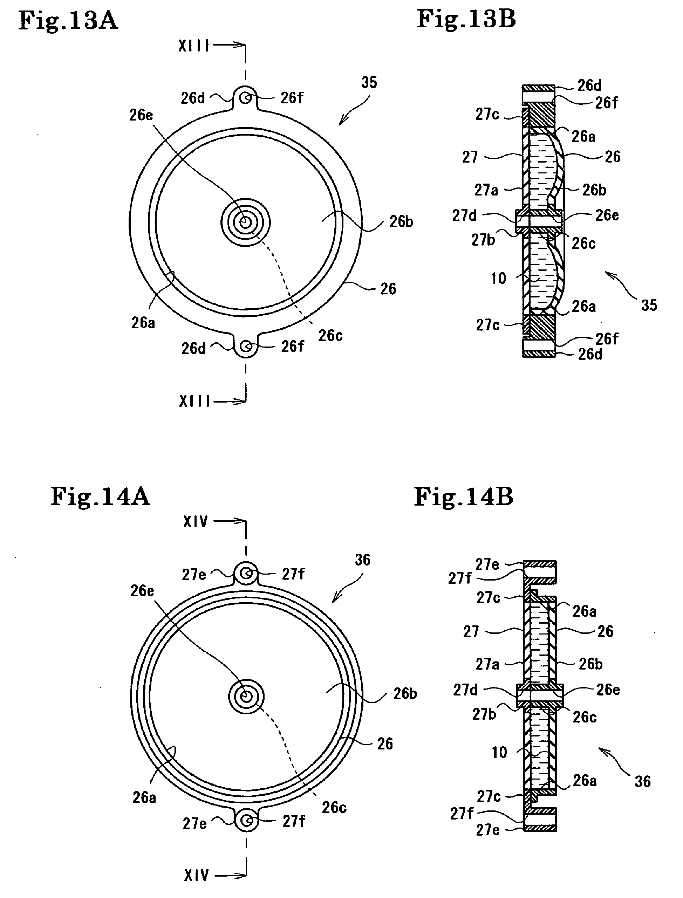

In a viscous fluid-sealed damper (35) according to the first modified example, as shown in Fig. 13B, the flat bottom portion (26b) as "the first closing portion (26b)" is formed in a curved and outward protruding manner. Thus, the filling amount of the viscous fluid (10) can be increased. Therefore, a great vibration damping effect can be achieved. The lid portion (27a) as "the second closing portion (27a)" can also be deformed in the same manner.

A flexible portion made of a rubbery elastic body is formed on the inner peripheral surface of the outer cylinder portion (26a) as part of "the peripheral wall portion (26a, 27c)", and connected to the bottom portion (26b). Thus, the area over which the outer cylinder portion (26a) is securely fixed to the bottom portion (26b) is enlarged, so the outer cylinder portion (26a) can be more securely fixed to the bottom portion (26b). The inner peripheral surface of the inner cylinder portion (26c) as part of "the inner wall portion (26c, 27b)" can also be deformed in the same manner.

In a viscous fluid-sealed damper (36) according to the second modified example, as shown in Figs. 14A and 14B, two lid body protrusion portions (27e) protruding outward of the outer edge portion (27c) are formed to replace the aforementioned body protrusion portions (26d). The lid body protrusion portions (27e), which are made of a hard resin, are formed to be equal in thickness to the body protrusion portions (26d). Circular outer mounting holes (27f) are formed through the lid body protrusion portions (27c) respectively. Thus, the outer cylinder portion (26a) can be formed with a small thickness, so the container body (26) can be welded to the lid body (27) with ease using ultrasonic waves.

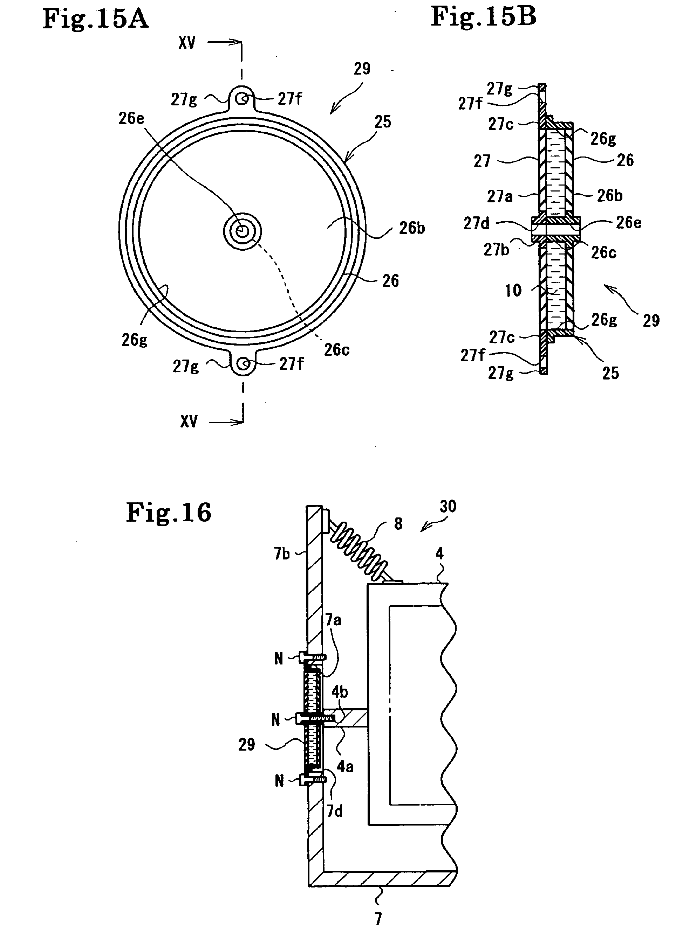

Fifth Embodiment [Figs. 15A to 16]

A. Embodiment of Viscous Fluid-sealed Damper: A viscous fluid-sealed damper (29) according to the fifth embodiment of the present invention is different from the viscous fluid-sealed damper (24) according to the fourth embodiment of the present invention first in a structure of an outer cylinder portion (26g) of the container body (26), and secondly in a structure of lid body protrusion portions (27g) formed on the outer edge portion (27c) of the lid body (17). The fluid-sealed damper (29) according to the fifth embodiment of the present invention is identical to the viscous fluid-sealed damper (24) according to the fourth embodiment of the present invention in other constructional details, so the same description will be omitted.

In the container body (26) of the viscous fluid-sealed damper (29), the radial thickness of the outer cylinder portion (26g) is made smaller than the thickness of the aforementioned outer cylinder portion (26a), and an annular collar portion is so formed at an end of the outer cylinder portion (26g) on the lid body (27) side as to protrude outward.

In the lid body (27) of the viscous fluid-sealed damper (29), the lid body protrusion portions (27g) are so formed at symmetrical positions around the inner cylinder portion (27b) as to protrude outward respectively. The circular outer mounting holes (27f) are formed through the lid body protrusion portions (27g), which are made of a hard resin and formed to be equal in thickness to the outer edge portion (27c).

In the viscous fluid-sealed damper (29) according to the fifth embodiment of the present invention constructed as described above, the outer cylinder portion (26g) and the outer edge portion (27c) constitute "the peripheral wall portion (26g, 27c)". The lid body protrusion portions (27g) having the outer mounting holes (27f) constitute "the outer mounting portion (27g)".

B. Embodiment of Disk Device: A disk device (30) according to the fifth embodiment of the present invention is different from the disk device (28) according to the fourth embodiment of the present invention in a structure in which the viscous fluid-sealed damper (29) is mounted between the mechanical chassis (4) and the casing (7) instead of the viscous fluid-sealed damper (24). The disk device (30) according to the fifth embodiment of the present invention is identical to the disk device (28) according to the fourth embodiment of the present invention in other constructional details, so the same description will be omitted.

As is the case with the viscous fluid-sealed damper (24) according to the fourth embodiment of the present invention, the viscous fluid-sealed damper (29) is fixed to the outer surface (7b) side of the casing (7) by means of the mounting screws (N). The through-holes (7a) formed through the casing (7) are formed to be larger in diameter than the outer cylinder portion (26g) of the viscous fluid-sealed damper (29). The outer cylinder portion (26g) of the viscous fluid-sealed damper (29) is fitted in each of the through-holes (7a). The tip of each of the mounting screws (N) is inserted into each of the outer holes (27f) and then screwed into each of the screw holes (7c). Thus, the viscous fluid-sealed damper (29) is fixed.

C. Operation and Effect of Viscous Fluid-sealed Damper (29) and Disk Device (30) according to Fifth Embodiment: Next, an operation and an effect of the fifth embodiment of the present invention will be described except those already described. However, the following description will be limited to features peculiar to the fifth embodiment of the present invention and will not cover those common to the fourth embodiment of the present invention.

The viscous fluid-sealed damper (29) can be mounted in such a state that the outer cylinder portion (26g) is fitted in each of the through-holes (7a) formed through the casing (7). Thus, the viscous fluid-sealed damper (29) can be restrained from sticking out inward or outward of the casing (7). Therefore, the clearance between the mechanical chassis (4) and the casing (7), and the space outside the casing (7) can be reduced. As a result, the space for installing the disk device (30) can be reduced.

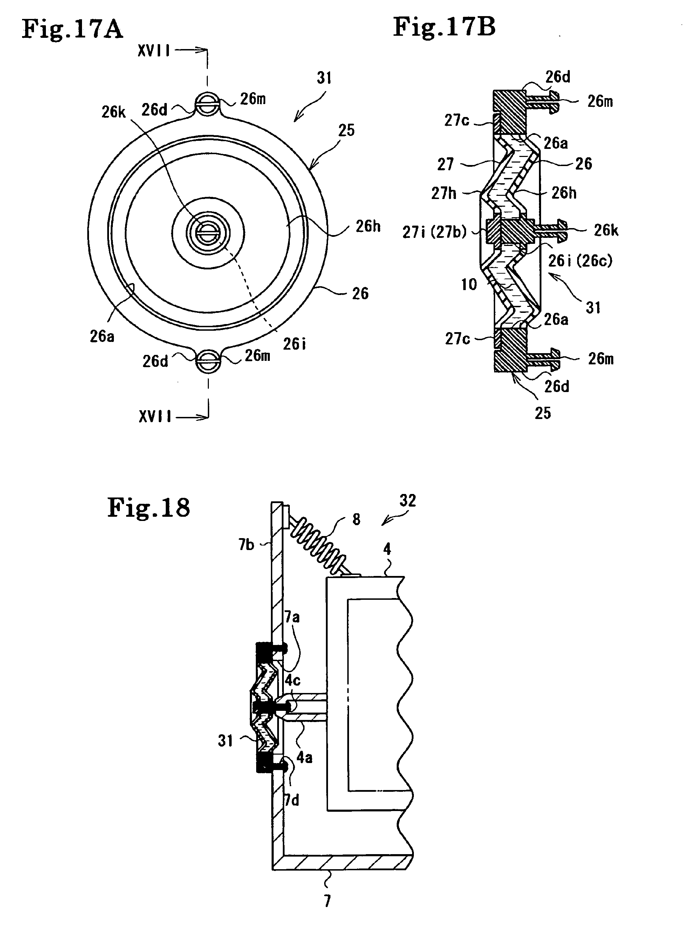

Sixth Embodiment [Figs. 17A to 18]

A. Embodiment of Viscous Fluid-sealed Damper: A viscous fluid-sealed damper (31) according to the sixth embodiment of the present invention is different from the viscous fluid-sealed damper (24) according to the fourth embodiment of the present invention in that the mounting screws (N) are completely dispensed with. More specifically, first of all, a center shaft portion (26i) and the body protrusion portions (26d), which are both solid, are formed through and on the container body (26) respectively. Secondly, the inner mounting holes (27d) according to the fourth embodiment of the present invention are dispensed with in the lid body (27). Further, a bottom portion (26h) of the container body (26) and a lid portion (27h) of the lid body (27) are formed in the shape of bellows. The viscous fluid-sealed damper (31) according to the sixth embodiment of the present invention is identical to the viscous fluid-sealed damper (24) according to the fourth embodiment of the present invention in other constructional details, so the same description will be omitted.

The center shaft portion (26i) provided through the container body (26) is so formed at a central position of the bellows-shaped bottom portion (26h) in the shape of a circular cylinder as to penetrate the bottom portion (26h) along the direction of the cylinder axis of the outer cylinder portion (26a) and protrude from both an inner surface and an outer surface of the bottom portion (26h). The length over which the center shaft portion (26i) protrudes from the inner surface of the bottom portion (26h) is just equal to the length of the outer cylinder portion (26a). A tip of the center shaft portion (26i) is securely fixed to a central mounting portion (27i) of the lid body (27) by ultrasonic welding. An inner mounting protrusion (26k), which assumes the shape of a circular cylinder, is so formed as to protrude from an axial center of the center shaft portion (26i), which is made of a hard resin. On the other hand, outer mounting protrusions (26m), which protrude from outer surfaces of the two body protrusion portions (26d) respectively, are formed thereon. A tip portion of the inner mounting protrusion (26k), which assumes the shape of an arrow tail, is engaged with each of the protrusion portions (4a) of the mechanical chassis (4) through each of the engagement holes (4c) thereof. Thus, the inner mounting protrusion (26k) and the mechanical chassis (4) are fixed to each other in such a state that the tip of each of the protrusion portions (4a) abuts on the center shaft portion (26i) as a base end of the inner mounting protrusion (26k) with no substantial play left therebetween. Also, a tip portion of each of the outer mounting protrusions (26m), which assumes the shape of an arrow tail, is engaged with the casing (7) through each of the engagement holes (7d) formed through the open hole edges thereof. Thus, each of the outer mounting protrusions (26m) and the casing (7) are fixed to each other in such a state that each of the outer surfaces (7b) of the casing (7) is in surface contact with each of the body protrusion portions (26d) with no substantial play left therebetween.

In the viscous fluid-sealed damper (31) according to the sixth embodiment of the present invention constructed as described above, the bottom portion (26h) constitutes "the first closing portion (26h)". The lid portion (27h) constitutes "the second closing portion (27h)". The inner mounting protrusion (26k), the center shaft portion (26i), and the central mounting portion (27i) constitute "the inner mounting portion (26i, 26k, 27i)". The outer mounting protrusions (26m) and the body protrusion portions (26d) constitute "the outer mounting portions (26d, 26m)".

B. Embodiment of Disk Device: A disk device (32) according to the sixth embodiment of the present invention is different from the disk device (28) according to the fourth embodiment of the present invention in a structure in which the viscous fluid-sealed damper (31) according to the sixth embodiment of the present invention is mounted between the casing (7) and the mechanical chassis (4) instead of the viscous fluid-sealed damper (24). The disk device (32) according to the sixth embodiment of the present invention is identical to the disk device (28) according to the fourth embodiment of the present invention in other constructional details, so the same description, including that of the operation and effect of the fourth embodiment of the present invention, will be omitted.

As is the case with the viscous fluid-sealed damper (24) according to the fourth embodiment of the present invention, the viscous fluid-sealed damper (31) is fixed to each of the outer surface (7b) sides of the casing (7). The inner mounting protrusion (26k) is so fixed as to be engaged with each of the protrusion portions (4a) of the mechanical chassis (4) through each of the engagement holes (4c), which are formed through the tips of the protrusion portions (4a) respectively. The outer mounting protrusions (26m) are so fixed as to be engaged with the casing (7) through the engagement holes (7d), which are formed through the open hole edges of the casing (7) respectively.

C. Operation and Effect of Viscous Fluid-sealed Damper (31) and Disk Device (32) according to Sixth Embodiment: Next, an operation and an effect of the sixth embodiment of the present invention will be described except those already described. However, the following description will be limited to features peculiar to the sixth embodiment of the present invention and will not cover those common to the fourth embodiment of the present invention.

In the viscous fluid-sealed damper (31), the inner mounting protrusion (26k) and the outer mounting protrusions (26m) are formed as protrusions protruding from the same surface side of the container body (26). Thus, when the inner mounting protrusion (26k) and the outer mounting protrusions (26m) are pressed into and inserted through the engagement holes (7d, 4c) provided through the casing (7) and the mechanical chassis (4), respectively, the viscous fluid-sealed damper (31) can thereby be mounted to the disk device (32) with ease. The inner mounting protrusion (26k) and the outer mounting protrusions (26m) protrude from the same surface side of the closed container (25), namely, from the surface side where the first closing portion (26h) exists, so the inner mounting protrusion (26k) and the outer mounting protrusions (26m) are mounted (inserted) in the same direction. Therefore, the mechanical chassis (4) can be mounted within the casing (7) with ease.

In the viscous fluid-sealed damper (31), the bottom portion (26h) as "the first closing portion (26h)" and the lid portion (27h) as "the second closing portion (27h)" are formed in the shape of bellows. This bellows-shape makes it possible to guarantee a geometrical deformation margin for preventing the rubbery elastic body from being excessively deformed in an extendable/contractible manner (elastically deformed). Therefore, even when the center shaft portion (26i) and the central mounting portion (27i) have moved by a long distance, the bottom portion (26h) and the lid portion (27h) are not excessively deformed in an extendable/contractible manner. Therefore, the viscous fluid (10) can effectively serve to damp vibrations without losing the viscous resistance thereof. Also, the durability of the rubbery elastic body, which repeatedly receives vibrations, can be enhanced.

Others: The characteristic constructions of the foregoing respective embodiments of the present invention are also applicable to other embodiments of the present invention. For example, although the bottom portion (26b) of the container body (26) according to the modified example of the fourth embodiment of the present invention is formed as a bulge portion, the construction of this modified example is also applicable to the other embodiments or modified examples of the present invention in which the bottom portion has no geometrical feature.

In the viscous fluid-sealed damper (22) according to the third embodiment of the present invention, the inner mounting protrusion (16i) and the outer mounting protrusions (16k) are provided on the container body (16). However, it is also possible to adopt a structure in which these mounting protrusions are provided on the lid body (17).

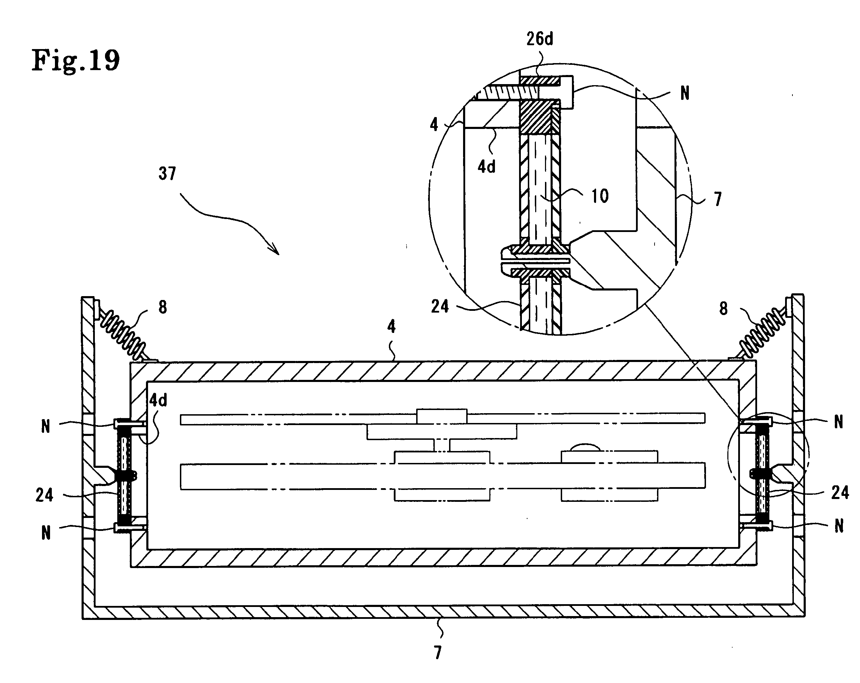

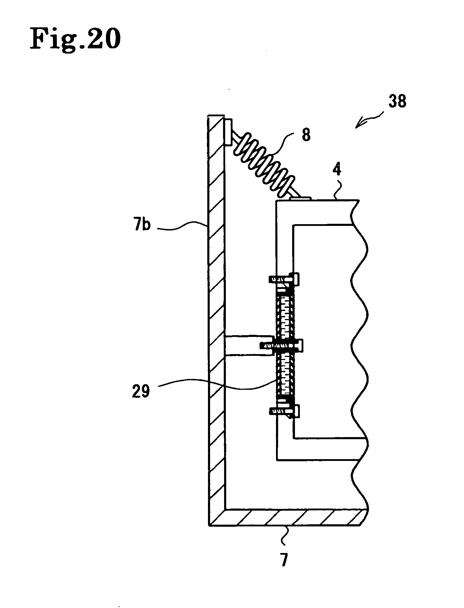

In the examples illustrated in the respective embodiments of the present invention, the through-holes (7a) are formed through the casing (7), and the outer mounting portions (16d, 16g, 16k, 17c, 26d, 26m, 27g) of the viscous fluid-sealed damper (14, 20, 22, 24, 29, 31, 33, 34, 35, 36) are fixed to the open hole edge of each of the through-holes (7a). However, it is also possible to form through-holes (4d) through the mechanical chassis (4) and fix the outer mounting portions (16d, 16g, 16k, 17c, 26d, 26m, 27g) of the viscous fluid-sealed damper (14, 20, 22, 24, 29, 31, 33, 34, 35, 36) to an open hole edge of each of the through-holes (4d). Figs. 19 and 20 show, as representative examples, a disk device (37) having the viscous fluid-sealed damper (24) according to the fourth embodiment of the present invention mounted to each of the outer surface sides of the mechanical chassis (4), and a disk device (38) having the viscous fluid-sealed damper (29) according to the fifth embodiment of the present invention fitted in and mounted to each of the holes of the mechanical chassis (4), respectively.

## Claims

1. A viscous fluid-sealed damper (14, 20, 22, 24, 29, 31, 33, 34, 35, 36) to be mounted between a supporting body (7) and a supported body (4) for damping vibrations of the supported body (4) through a viscous resistance of a viscous fluid (10), comprising
a closed container (15, 25) within which the viscous fluid (10) is sealed up, **characterised in that**
the closed container (15, 25) is formed in a shape of a hollow flat plate out of a cylindrical peripheral wall portion (16a, 16d, 17e, 26a, 26g, 27c, 27d), an inner wall portion (16c, 16h, 17f, 26c, 26i, 27b) formed inside the peripheral wall portion (16a, 16d, 17e, 26a, 26g, 27c, 27d) along a direction of a cylinder axis thereof, a first closing portion (16b, 26b, 26h) exhibiting flexibility, which connects same end sides of the peripheral wall portion (16a, 16d, 17c, 26a, 26g, 27c, 27d) and the inner wall portion (16c, 16h, 17f, 26c, 26i, 27b) to each other to close a clearance therebetween, and a second closing portion (17g, 27a, 27h) exhibiting flexibility, which connects the other end sides of the peripheral wall portion (16a, 16d, 17e, 26a, 26g, 27c, 27d) and the inner wall portion (16c, 16h, 17f, 26c, 26i, 27b) to each other to close a clearance therebetween;
the peripheral wall portion (16a, 16d, 17e, 26a, 26g, 27c, 27d) has formed thereon an outer mounting portion (16d, 16g, 16k, 17c, 26d, 27e, 27g, 26m) for being mounted to one of the supporting body (7) and the supported body (4); and
the inner wall portion (16c, 16h, 17f, 26c, 26i, 27b) is provided with an inner mounting portion (16c, 16h, 16i, 17f, 17h, 26c, 26i, 26k, 27d, 27i) for being mounted to the other of the supporting body (7) and the supported body (4).

2. A viscous fluid-sealed damper (14, 20, 22, 33, 34) according to claim 1, wherein the closed container (15) is made of a rubbery elastic body.

3. A viscous fluid-sealed damper (24, 29, 31, 35, 36) according to claim 1, wherein:
the peripheral wall portion (26a, 26g, 27c) and the inner wall portion (26c, 27b) of the closed container (25) are made of a hard resin; and
the first closing portion (26b, 26h) and the second closing portion (27a, 27h) of the closed container (25) are made of a rubbery elastic body.

4. A viscous fluid-sealed damper (14, 20, 22, 33, 34) according to any one of claims 1 to 3, wherein the closed container (15) is formed in a shape of a hollow circular plate.

5. A viscous fluid-sealed damper (31, 34) according to any one of claims 1 to 4, wherein the first closing portion (16b, 27h) and the second closing portion (17g, 27h) are formed in a shape of bellows.

6. A viscous fluid-sealed damper (14, 20, 24, 29, 33, 34, 35, 36) according to any one of claims 1 to 5, wherein:
the outer mounting portion (16d, 16g, 17c, 26d, 27e, 27g) has an outer mounting hole (16f, 17d, 26f, 27f) penetrating a wall thickness thereof; and
the inner mounting portion (16c, 17f, 26c, 27d) has an inner mounting hole (16e, 17b, 26e, 27d) penetrating a wall thickness thereof.

7. A viscous fluid-sealed damper (22, 31) according to any one of claims 1 to 6, wherein:
the outer mounting portion (16d, 16g, 16k, 17c, 26d, 26m, 27g) has an outer mounting protrusion (16k, 26m) protruding therefrom;
the inner mounting portion (16h, 16i, 17h, 26i, 26k, 27i) has an inner mounting protrusion (16i, 26k) protruding therefrom; and
the outer mounting protrusion (16k, 26m) and the inner mounting protrusion (16i, 26k) protrude from a same surface side of the closed container (15).

8. A disk device (18, 21, 23, 28, 30, 32, 37) comprising:
a mechanical chassis (4);
a casing (7); and
the viscous fluid-sealed damper (14, 20, 22, 24, 29, 31, 33, 34, 35, 36) according to any one of claims 1 to 7, wherein:
one of the mechanical chassis (4) and the casing (7) has the outer mounting portion (16d, 16g, 16k, 17c, 26d, 26m, 27g) of the viscous fluid-sealed damper (14, 20, 22, 24, 29, 31, 33, 34, 35, 36) fixed thereto; and
the other of the mechanical chassis (4) and the casing (7) has the inner mounting portion (16c, 16h, 16i, 17f, 17h, 26c, 26i, 26k, 27d, 27i) of the viscous fluid-sealed damper (14, 20, 22, 24, 29, 31, 33, 34, 35, 36) fixed thereto.

9. A disk device (18, 21, 23, 28, 30, 32, 37) according to claim 8, wherein:
one of the mechanical chassis (4) and the casing (7) has a through-hole (4d, 7a) formed therethrough; and
the outer mounting portion (16d, 16g, 16k, 17c, 26d, 26m, 27g) of the viscous fluid-sealed damper (14, 20, 22, 24, 29, 31, 33, 34, 35, 36) is fixed to an open hole edge of the through-hole (4d, 7a).

10. A disk device (18, 21, 23, 28, 30, 32) according to claim 9, wherein the casing (7) has the through-hole (7a) formed therethrough.

11. A disk device (18, 21, 23, 28, 30, 32) according to claim 10, wherein the outer mounting portion (16d, 16g, 16k, 17c, 26d, 26m, 27g) of the viscous fluid-sealed damper (14, 20, 22, 24, 29, 31, 33, 34, 35, 36) is fixed to the open hole edge of the through-hole (7a) provided through the casing (7) from an outer surface (7b) side thereof.

12. A disk device (18, 21, 23, 28, 30, 32) according to claim 10, wherein:
the peripheral wall portion (16a, 16d, 17e, 26a, 26g, 27c, 27d) of the viscous fluid-sealed damper (14, 20, 22, 24, 29, 31, 33, 34, 35, 36) is fitted in the through-hole (7a) provided through the casing (7); and
the outer mounting portion (16d, 16g, 16k, 17c, 26d, 26m, 27g) of the viscous fluid-sealed damper (14, 20, 22, 24, 29, 31, 33, 34, 35, 36) is fixed to the open hole edge of the through-hole (7a).

13. A disk device (18, 21, 23, 28, 30, 32) according to claim 9, wherein the through-hole (7a) is formed through the mechanical chassis (4).

14. A disk device (37) according to claim 13, wherein the outer mounting portion (16d, 16g, 16k, 17c, 26d, 26m, 27g) of the viscous fluid-sealed damper (14, 20, 22, 24, 29, 31, 33, 34, 35, 36) is fixed to the open hole edge of the through-hole (7a) provided through the mechanical chassis (4) from an outer surface side thereof.

15. A disk device (38) according to claim 13, wherein:
the peripheral wall portion (16a, 16d, 17e, 26a, 26g, 27c, 27d) of the viscous fluid-sealed damper (14, 20, 22, 24, 29, 31, 33, 34, 35, 36) is fitted in the through-hole (7a) provided through the mechanical chassis (4); and
the outer mounting portion (16d, 16g, 16k, 17c, 26d, 26m, 27g) of the viscous fluid-sealed damper (14, 20, 22, 24, 29, 31, 33, 34, 35, 36) is fixed to the open hole edge of the through-hole (7a).

## Patentansprüche

1. Viskose Flüssigkeit enthaltender Dämpfer (14,20, 22,24,29,31,33,34,35,36), welcher zwischen einem tragenden Körper (7) und einem getragenen Körper (4) montierbar ist, zum Dämpfen des getragenen Körpers (4) durch einen viskosen Widerstand einer viskosen Flüssigkeit (10), welcher einen geschlossenen Behälter (15,25) aufweist, innerhalb welchem die viskose Flüssigkeit (10) abgedichtet ist,
**dadurch gekennzeichnet, dass**
der geschlossene Behälter (15,25) in einer Form einer hohlen, flachen Platte aus einem zylindrischen Umfangswandabschnitt (16a,16d,17e,26a,26g, 27c,27d), einem innerhalb des Umfangswandabschnitts (16a,16d,17e,26a,26g,27c,27d) entlang einer Richtung einer Zylinderachse desselben gebildeten inneren Wandabschnitt (16c,16h,17f,26c,26i,27b), einem ersten Abdeckabschnitt (16b,26b,26h), der eine Flexibilität aufweist und dieselben Endseiten des Umfangswandabschnitts (16a,16d,17c,26a,26g,27c,27d) und des inneren Wandabschnitts (16c,16h,27f,26c,26,i,27b) miteinander verbindet, um einen Abstand dazwischen zu schließen, und einem zweiten Abdeckabschnitt (17g,27a,27h) gebildet ist, der eine Flexibilität aufweist und die anderen Endseiten des Umfangswandabschnitts (16a,16d,17e,26a,26g,27c,27d) und des inneren Wandabschnitts (16c,26h,17f,26c, 26i,27b) miteinander verbindet, um einen Abstand dazwischen zu schließen;
an dem Umfangswandabschnitt (16a,16d,17e,26a,26g, 27c, 27d) ein äußerer Montierabschnitt (16d,16g, 16k,17c,26d,27e,27g,26m) gebildet ist, um entweder an dem tragenden Körper (7) oder dem getragenen Körper (4) angebracht zu werden; und
der innere Wandabschnitt (16c,16h,17f,26c,26i,27b) mit einem inneren Montierabschnitt (16c,16h,16i, 17f,17h,26c,26i,26k,27d,27i) versehen ist, der dafür vorgesehen ist, an dem anderen des tragenden Körper (7) oder des getragenen Körpers (4) angebracht zu werden.

2. Viskose Flüssigkeit enthaltender Dämpfer (14,20, 22,33,34) gemäß Anspruch 1, wobei der geschlossene Behälter (15) aus einem gummiartigen, elastischen Körper hergestellt ist.

3. Viskose Flüssigkeit enthaltender Dämpfer (24,29, 31,35,36) gemäß Anspruch 1, wobei:
der Umfangswandabschnitt (26a,26g,27c) und der innere Wandabschnitt (26c,27b) des geschlossenen Behälters (25) aus einem harten Kunstharz hergestellt sind; und
der erste Abdeckabschnitt (26b,26h) und der zweite Abdeckabschnitt (27a,27h) des geschlossenen Behälters (25) aus einem gummiartigen, elastischen Körper hergestellt sind.

4. Viskose Flüssigkeit enthaltender Dämpfer (14,20, 22,33,34) gemäß einem der Ansprüche 1 bis 3, wobei der geschlossene Behälter (15) in einer Form einer hohlen, kreisförmigen Platte gebildet ist.

5. Viskose Flüssigkeit enthaltender Dämpfer (31,34) gemäß einem der Ansprüche 1 bis 4, wobei der erste Abdeckabschnitt (16b,27h) und der zweite Abdeckabschnitt (17g,27h) in einer Form von Bälgen gebildet sind.

6. Viskose Flüssigkeit enthaltender Dämpfer (14,20, 24,29,33,34,35,36) gemäß einem der Ansprüche 1 bis 5, wobei:
der äußere Montierabschnitt (16d,16g,17c,26d,27e, 27g) eine äußere Montierbohrung (16f,17d,26f,27f) aufweist, welche eine Wanddicke desselben durchdringt; und
der innere Montierabschnitt (16c,17f,26c,27d) eine innere Montierbohrung (16e,17b,26e,27d) aufweist, welche eine Wanddicke desselben durchdringt.

7. Viskose Flüssigkeit enthaltender Dämpfer (22,31) gemäß einem der Ansprüche 1 bis 6, wobei:
der äußere Montierabschnitt (16d,16g,16k,17c,26d, 26m,27g) einen von demselben vorstehenden äußeren Montiervorsprung (16k,26m) aufweist;
der innere Montierabschnitt (16h,16i,17h,26i,26k, 27i) einen von demselben vorstehenden inneren Montiervorsprung (16i,26k) aufweist; und
der äußere Montiervorsprung (16k,26m) und der innere Montiervorsprung (16i,26k) von derselben Oberflächenseite des geschlossenen Behälters (15) hervorstehen.

8. Plattenvorrichtung (18,21,23,28,30,32,37) welche folgendes aufweist:
ein mechanisches Chassis (4);
ein Gehäuse (7); und
den eine viskose Flüssigkeit enthaltenden Dämpfer (14,20,22,24,29,31,33,34,35,36) gemäß einem der Ansprüche 1 bis 7, wobei:
entweder an dem mechanischen Chassis (4) oder an dem Gehäuse (7) der äußere Montierabschnitt (16d,16g,26k,17c,26d,26m,27g) des eine viskose Flüssigkeit enthaltenden Dämpfers (14,20,22,24,29, 31,33,34,35,36) angebracht ist; und
an dem anderen des mechanischen Chassis (4) oder des Gehäuses (7) der innere Montierabschnitt (16c, 16h,16i,17f,17h,26c,26i,26k,27d,27i) des eine viskose Flüssigkeit enthaltenden Dämpfers (14,20,22, 24,29,31,33,34,35,36) angebracht ist.

9. Plattenvorrichtung (18,21,23,28,30,32,37) gemäß Anspruch 8, wobei:
entweder das mechanische Chassis (4) oder das Gehäuse (7) eine durch denselben verlaufende Durchgangsbohrung (4d,7a) aufweist; und
der äußere Montierabschnitt (16d,16g,16k,17c,26d, 26m, 27g) des eine viskose Flüssigkeit enthaltenden Dämpfers (14,20,22,24,29,31,33,34,35,36) an einem offenen Bohrungsrand der Durchgangsbohrung (4d,7a) angebracht ist.

10. Plattenvorrichtung (18,21,23,28,30,32) gemäß Anspruch 9, wobei durch das Gehäuse (7) verlaufend die Durchgangsbohrung (7a) gebildet ist.

11. Plattenvorrichtung (18,21,23,28,30,32) gemäß Anspruch 10, wobei der äußere Montierabschnitt (16d,16g,16k,17c,26d,26m,27g) des eine viskose Flüssigkeit enthaltenden Dämpfers (14,20,22,24,29, 31,33,34,35,36) an dem offenen Bohrungsrand der durch das Gehäuse (7) von einer äußeren Oberflächenseite (7b) desselben verlaufenden Durchgangsbohrung (7a) angebracht ist.

12. Plattenvorrichtung (18,21,23,28,30,32) gemäß Anspruch 10, wobei:
der Umfangswandabschnitt (16a,16d,17e,26a,26g, 27c,27d) des eine viskose Flüssigkeit enthaltenden Dämpfers (14,20,22,24,29,31,33,34,35,36) in der durch das Gehäuse (7) verlaufenden Durchgangsbohrung (7a) angebracht ist; und
der äußere Montierabschnitt (16d,16g,16k,17c,26d, 26m,27g) des eine viskose Flüssigkeit enthaltenden Dämpfers (14,20,22,2,29,31,33,34,35,36) an dem offenen Bohrungsrand der Durchgangsbohrung (7a) angebracht ist.

13. Plattenvorrichtung (18,21,23,28,30,32) gemäß Anspruch 9, wobei die Durchgangsbohrung (7a) durch das mechanische Chassis (4) gebildet ist.

14. Plattenvorrichtung (37) gemäß Anspruch 13, wobei der äußere Montierabschnitt (16d,16g,16k,17c,26d, 26m,27g) des eine viskose Flüssigkeit enthaltenden Dämpfers (14,20,22,24,29,31,33,34,35,36) an dem offenen Bohrungsrand der durch das mechanische Chassis (4) von einer äußeren Oberflächenseite desselben vorgesehenen Durchgangsbohrung (7a) befestigt ist.

15. Plattenvorrichtung (38) gemäß Anspruch 13, wobei:
der Umfangswandabschnitt (16a,16d,17e,26a,26g, 27c,27d) des eine viskose Flüssigkeit enthaltenden Dämpfers (14,20,22,24,29,31,33,34,35,36) in der durch das mechanische Chassis (4) vorgesehenen Durchgangsbohrung (7a) angebracht ist; und
der äußere Montierabschnitt (16d,16g,16k,17c,26d, 26m,27g) des eine viskose Flüssigkeit enthaltenden Dämpfers (14,20,22,24,29,31,33,34,35,36) an dem offenen Bohrungsrand der Durchgangsbohrung (7a) angebracht ist.

## Revendications

1. Amortisseur visqueux étanche aux fluides (14, 20, 22, 24, 29, 31, 33, 34, 35, 36) à monter entre un corps de support (7) et un corps supporté (4) pour amortir les vibrations dans le corps supporté (4) par l'intermédiaire d'une résistance visqueuse d'un fluide visqueux (10), comprenant:
un contenant fermé (15, 25) dans lequel le fluide visqueux (10) est enfermé, **caractérisé en ce que**
le contenant fermé (15, 25) a la forme d'une plaque plate creuse formée d'une partie de paroi périphérique cylindrique (16a, 16d, 17e, 26a, 26g, 27c, 27d), d'une partie de paroi intérieure (16c, 16h, 17f, 26c, 26i, 27b) formée à l'intérieur de la partie de paroi périphérique (16a, 16d, 17e, 26a, 26g, 27c, 27d) dans une direction d'un axe du cylindre de celle-ci, d'une première partie de fermeture (16b, 26b, 26h) flexible, qui relie les côtés de la même extrémité de la partie de paroi périphérique (16a, 16d, 17e, 26a, 26g, 27c, 27d) et de la partie de paroi intérieure (16c, 16h, 17f, 26c, 26i, 27b) l'un à l'autre pour fermer un espace qui les sépare et une seconde partie de fermeture (17g, 27a, 27h) flexible, qui relie les côtés de l'autre extrémité de la partie de paroi périphérique (16a, 16d, 17e, 26a, 26g, 27c, 27d) et de la partie de paroi intérieure(16c, 16h, 17f, 26c, 26i, 27b) l'un à l'autre pour fermer un espace qui les sépare;
une partie de montage extérieure (16d, 16g, 16k, 17c, 26d, 27e, 27g, 26m) est formée sur la partie de paroi périphérique (16a, 16d, 17e, 26a, 26g, 27c, 27d) pour la monter sur le corps de support (7) ou sur le corps supporté (4); et
la partie de paroi intérieure (16c, 16h, 17f, 26c, 26i, 27b) est pourvue d'une partie de montage intérieure (16c, 16h, 16i, 17f, 17h, 26c, 26i, 26k, 27d, 27i) pour la monter sur l'autre corps de support (7) ou supporté (4).

2. Amortisseur visqueux étanche aux fluides (14, 20, 22, 33, 34) selon la revendication 1, dans lequel le contenant fermé (15) est fait d'un corps élastique caoutchouteux.

3. Amortisseur visqueux étanche aux fluides (24, 29, 31, 35, 36) selon la revendication 1 dans lequel:
la partie de paroi périphérique (26a, 26g, 27c) et la partie de paroi intérieure (26c, 27b) du contenant fermé (25) sont faites en une résine dure; et
la première partie de fermeture (26b, 26h) et la seconde partie de fermeture (27a, 27h) du contenant fermé (25) sont faites en un corps élastique caoutchouteux.

4. Amortisseur visqueux étanche aux fluides (14, 20, 22, 33, 34) selon l'une quelconque des revendications 1 à 3, dans lequel le contenant fermé (15) a la forme d'une plaque circulaire creuse.

5. Amortisseur visqueux étanche aux fluides (31, 34) selon l'une quelconque des revendications 1 à 4, dans lequel la première partie de fermeture (16b, 27h) et la seconde partie de fermeture (17g, 27h) ont la forme d'un soufflet.

6. Amortisseur visqueux étanche aux fluides (14, 20, 24, 29, 33, 34, 35, 36) selon l'une quelconque des revendications 1 à 5, dans lequel:
la partie de montage extérieure (16d, 16g, 17c, 26d, 27e, 27g) comporte un orifice de montage extérieur (16f, 17d, 26f, 27f) pénétrant dans l'épaisseur d'une de ses parois; et
la partie de montage intérieure (16c, 17f, 26c, 27d) comporte un orifice de montage intérieur (16e, 17b, 26e, 27d) pénétrant dans l'épaisseur d'une de ses parois.

7. Amortisseur visqueux étanche aux fluides (22, 31) selon l'une quelconque des revendications 1 à 6, dans lequel:
la partie de montage extérieure (16d, 16g, 16k, 17c, 26d, 26m, 27g) comporte une protubérance de montage extérieure (16k, 26m) dépassant de ladite partie;
la partie de montage intérieure (16h, 16i, 17h, 26i, 26k, 27i) comporte une protubérance de montage intérieure (16i, 26k) dépassant de ladite partie; et
la protubérance de montage extérieure (16k, 26m) et la protubérance de montage intérieure (16i, 26k) dépassent d'un même côté de surface du contenant fermé (15).

8. Appareil à disque (18, 21, 23, 28, 30, 32, 37) comprenant:
un châssis mécanique (4) ;
un boîtier (7); et
l'amortisseur visqueux étanche aux fluides (14, 20, 22, 24, 29, 31, 33, 34, 35, 36) selon l'une quelconque des revendications 1 à 7, dans lequel:
un, du châssis mécanique (4) ou du boîtier (7) est attaché à la partie de montage extérieure (16d, 16g, 16k, 17c, 26d, 26m, 27g) de l'amortisseur visqueux étanche aux fluides (14, 20, 22, 24, 29, 31, 33, 34, 35, 36); et
l'autre, du châssis mécanique (4) ou du boîtier (7), est attaché à la partie de montage intérieure (16c, 16h, 16i, 17f, 17h, 26c, 26i, 26k, 27d, 27i) de l'amortisseur visqueux étanche aux fluides (14, 20, 22, 24, 29, 31, 33, 34, 35, 36).

9. Appareil à disque (18, 21, 23, 28, 30, 32, 37) selon la revendication 8, dans lequel:
un, du châssis mécanique (4) ou du boîtier (7) est pourvu d'un trou traversant (4d, 7a); et
la partie de montage extérieure (16d, 16g, 16k, 17c, 26d, 26m, 27g) de l'amortisseur visqueux étanche aux fluides (14, 20, 22, 24, 29, 31, 33, 34, 35, 36) est attachée à un bord de trou ouvert du trou débouchant (4d, 7a).

10. Appareil à disque (18, 21, 23, 28, 30, 32) selon la revendication 9, dans lequel le boîtier (7) est pourvu d'un trou traversant (7a).

11. Appareil à disque (18, 21, 23, 28, 30, 32) selon la revendication 10, dans lequel la partie de montage extérieure (16d, 16g, 16k, 17c, 26d, 26m, 27g) de l'amortisseur visqueux étanche aux fluides (14, 20, 22, 24, 29, 31, 33, 34, 35, 36) est attachée au bord du trou ouvert du trou traversant (7a) ménagé à travers le boîtier (7) à partir d'une surface extérieure (7b) dudit boîtier.

12. Appareil à disque (18, 21, 23, 28, 30, 32) selon la revendication 10, dans lequel:
la partie de paroi périphérique (16a, 16d, 17e, 26a, 26g, 27c, 27d) de l'amortisseur visqueux étanche aux fluides (14, 20, 22, 24, 29, 31, 33, 34, 35, 36) est ajustée dans le trou traversant (7a) ménagé à travers le boîtier (7); et
la partie de montage extérieure (16d, 16g, 16k, 17c, 26d, 26m, 27g) de l'amortisseur visqueux étanche aux fluides (14, 20, 22, 24, 29, 31, 33, 34, 35, 36) est attachée au bord du trou ouvert du trou traversant (7a).

13. Appareil à disque (18, 21, 23, 28, 30, 32) selon la revendication 9, dans lequel le trou traversant (7a) est formé à travers le châssis mécanique (4).

14. Appareil à disque (37) selon la revendication 13, dans lequel la partie de montage extérieure (16d, 16g, 16k, 17c, 26d, 26m, 27g) de l'amortisseur visqueux étanche aux fluides (14, 20, 22, 24, 29, 31, 33, 34, 35, 36) est attachée au bord du trou ouvert du trou traversant (7a) ménagé à travers le châssis mécanique (4) à partir du côté de la surface extérieure de celui-ci.

15. Appareil à disque (38) selon la revendication 13, dans lequel:
la partie de paroi périphérique (16a, 16d, 17e, 26a, 26g, 27c, 27d) de l'amortisseur visqueux étanche aux fluides (14, 20, 22, 24, 29, 31, 33, 34, 35, 36) est ajustée dans le trou traversant (7a) ménagé à travers le châssis mécanique (4); et
la partie de montage extérieure (16d, 16g, 16k, 17c, 26d, 26m, 27g) de l'amortisseur visqueux étanche aux fluides (14, 20, 22, 24, 29, 31, 33, 34, 35, 36) est fixée au bord du trou ouvert du trou traversant (7a).
